(19) Europäisches Patentamt
European Patent Office
Office européen des brevets

(11) EP 4 431 303 A1

(12) EUROPEAN PATENT APPLICATION
published in accordance with Art. 153(4) EPC

(43) Date of publication:
**18.09.2024 Bulletin 2024/38**

(21) Application number: **22892468.4**

(22) Date of filing: **07.10.2022**

(51) International Patent Classification (IPC):
***B41M 5/00*** *(2006.01)* ***B41J 2/01*** *(2006.01)*
***C09D 11/38*** *(2014.01)* ***C09D 11/40*** *(2014.01)*

(52) Cooperative Patent Classification (CPC):
**B41J 2/01; B41M 5/00; C09D 11/38; C09D 11/40**

(86) International application number:
**PCT/JP2022/037729**

(87) International publication number:
**WO 2023/084968 (19.05.2023 Gazette 2023/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.11.2021 JP 2021182709**

(71) Applicant: **FUJIFILM Corporation**
**Tokyo 106-8620 (JP)**

(72) Inventors:
- **SHIMOYAMA, Tatsuya**
**Ashigarakami-gun, Kanagawa 258-8577 (JP)**
- **HONGO, Yushi**
**Ashigarakami-gun, Kanagawa 258-8577 (JP)**
- **SHINOHARA, Ryuji**
**Ashigarakami-gun, Kanagawa 258-8577 (JP)**

(74) Representative: **Klunker IP Patentanwälte PartG mbB**
**Destouchesstraße 68**
**80796 München (DE)**

# (54) INKJET RECORDING METHOD AND INK SET

(57) Provided are an ink jet recording method including a step of jetting a first ink from a first ink jet head to a recording medium, and a step of jetting a second ink having a hue different from a hue of the first ink, from a second ink jet head to a region of the recording medium onto which the first ink has been applied, in which in a case where a time taken from the jetting of the first ink from the first ink jet head to the jetting of the second ink from the second ink jet head is defined as T ms, a dynamic surface tension of the first ink at T ms is defined as $\gamma 1(T)$ mN/m, a dynamic surface tension of the first ink at 10 ms is defined as $\gamma 1(10)$ mN/m, and a dynamic surface tension of the second ink at 10 ms is defined as $\gamma 2(10)$ mN/m, Expressions 1 and 2 are satisfied, and an application thereof.

$$0 \leq \gamma 2(10) - \gamma 1(T) \leq 3.0 \ldots (1)$$

$$0 \leq \gamma 2(10) - \gamma 1(10) \ldots (2)$$

EP 4 431 303 A1

## Description

BACKGROUND OF THE INVENTION

1. Field of the Invention

The present disclosure relates to an inkjet recording method and an ink set.

2. Description of the Related Art

In the related art, image recording carried out using two or more kinds of inks with different hues has been examined.

For example, JP2017-8319A discloses an inkjet recording method using an ink set for ink jet recording, which includes two or more kinds of aqueous inks containing a pigment (A), a water-insoluble polymer (B), an organic solvent (C), a surfactant (D), and water, in which the organic solvent (C) contains at least glycol ether (c-1), the viscosity of the glycol ether (c-1) is 2.0 mPa·s or greater and 7.0 mPa·s or less at 20°C, the content of the glycol ether (c-1) with a viscosity of 6.0 mPa s or greater at 20°C is 0% by mass or greater and 5% by mass or less, the vapor pressure thereof at 20°C is 0.01 hPa or greater and 7.0 hPa or less, the surfactant (D) contains 0.005% by mass or greater and 0.3% by mass or less of a silicone-based surfactant (d-1), the content of the organic solvent (C) is 25% by mass or greater and 50% by mass or less, and the content of the organic solvent having a high boiling point of 250°C or higher in the aqueous ink is 5% by mass or less.

WO2020/203088A discloses an image recording method including a step of respectively preparing an impermeable base material, a white ink jet ink A, and a white ink jet ink B having a dynamic surface tension less than that of the white ink jet ink A at 10 ms and a step of recording an image by jetting the white ink jet ink A from an ink jet head A to apply the ink onto the impermeable base material and jetting the white ink jet ink B from an ink jet head B and applying the ink to a region where the white ink jet ink A has been applied onto the impermeable base material, in which the step of recording an image includes landing liquid droplets A of the white ink jet ink A on the impermeable base material and landing liquid droplets B of the white ink jet ink B thereon to form ink dots A and ink dots B, having portions overlapping with each other, and the time taken from the landing of the liquid droplets A to the landing of the liquid droplets B is in a range of 20 ms to 10,000 ms.

SUMMARY OF THE INVENTION

In a case where an image is recorded by superimposing two or more kinds of inks having hues different from each other, intercolor mixing occurs in some cases.

The present disclosure has been made in consideration of the above-described circumstances, and an object of an embodiment of the present invention is to provide an ink jet recording method and an ink set, in which intercolor mixing can be suppressed.

The present disclosure includes the following aspects.

<1> An ink jet recording method comprising: a step of jetting a first ink from a first ink jet head to a recording medium; and a step of jetting a second ink having a hue different from a hue of the first ink, from a second ink jet head to a region of the recording medium onto which the first ink has been applied, in which in a case where a time taken from the jetting of the first ink from the first ink jet head to the jetting of the second ink from the second ink jet head is defined as T ms, a dynamic surface tension of the first ink at T ms is defined as $\gamma 1(T)$ mN/m, a dynamic surface tension of the first ink at 10 ms is defined as $\gamma 1(10)$ mN/m, and a dynamic surface tension of the second ink at 10 ms is defined as $\gamma 2(10)$ mN/m, Expressions 1 and 2 are satisfied,

$$0 \leq \gamma 2(10) - \gamma 1(T) \leq 3.0 \ldots (1)$$

$$0 \leq \gamma 2(10) - \gamma 1(10) \ldots (2).$$

<2> The ink jet recording method according to <1>, in which the first ink and the second ink are two inks selected from the group consisting of a yellow ink, a magenta ink, a cyan ink, and a black ink.

<3> The inkjet recording method according to <1> or <2>, in which the T is in a range of 80 to 1,000.

<4> The inkjet recording method according to any one of <1> to <3>, in which a value obtained by subtracting the

$\gamma$1(10) from the $\gamma$2(10) is 2.0 or less.

<5> The ink jet recording method according to any one of <1> to <4>, in which both the $\gamma$1(10) and the $\gamma$2(10) are 35 or less.

<6> The ink jet recording method according to any one of <1> to <5>, in which both the first ink and the second ink contain a silicone-based surfactant.

<7> The ink jet recording method according to <6>, in which a content of the silicone-based surfactant in the first ink is 0.4% by mass or greater with respect to a total amount of the first ink, and a content of the silicone-based surfactant in the second ink is 0.4% by mass or greater with respect to a total amount of the second ink.

<8> The ink jet recording method according to <6> or <7>, in which the silicone-based surfactant has a structure represented by Formula 3,

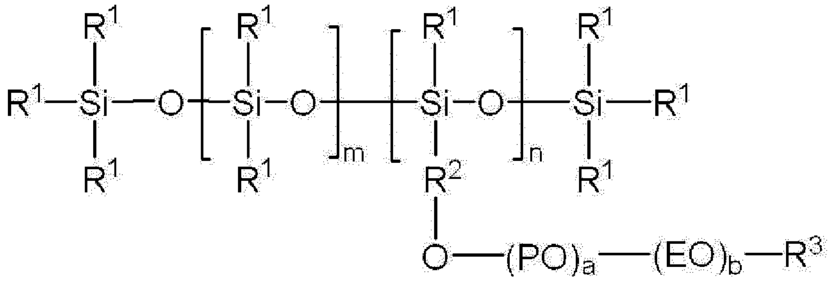

(3)

in Formula 3, $R^1$'s each independently represent an alkyl group having 1 to 3 carbon atoms or a hydroxy group, $R^2$ represents an alkanediyl group having 2 to 5 carbon atoms, $R^3$ represents a hydrogen atom, an alkyl group having 1 to 3 carbon atoms, or a hydroxy group, PO represents a propyleneoxy group, and EO represents an ethyleneoxy group, and a, b, m, and n represent an average addition mole number of each unit, where a is in a range of 0 to 10, b is in a range of 1 to 50, m is in a range of 1 to 500, and n is in a range of 1 to 50.

<9> The ink jet recording method according to <8>, in which in Formula 3, a is 0, b is in a range of 1 to 15, m is in a range of 1 to 10, and n is in a range of 1 to 5.

<10> The ink jet recording method according to any one of <1> to <9>, further comprising: a step of jetting a third ink having a hue different from the hues of the first ink and the second ink, from a third ink jet head to a region of the recording medium onto which the first ink and the second ink have been applied in an overlapping manner, in which in a case where a time taken from the jetting of the second ink from the second inkjet head to the jetting of the third ink from the third ink jet head is defined as TX ms, a dynamic surface tension of the second ink at TX ms is defined as y2(TX) mN/m, the dynamic surface tension of the second ink at 10 ms is defined as $\gamma$2(10) mN/m, and a dynamic surface tension of the third ink at 10 ms is defined as $\gamma$3(10) mN/m, Expressions 4 and 5 are satisfied,

$$0 \leq \gamma3(10) - \gamma2(T) \leq 3.0 \ldots (4)$$

$$0 \leq \gamma3(10) - \gamma2(10) \ldots (5).$$

<11> An ink set comprising: a first ink that contains a colorant, a surfactant, and water; and a second ink that contains a colorant, a surfactant, and water, in which the first ink and the second ink have hues different from each other, and in a case where the dynamic surface tension of the first ink at 10 ms is defined as $\gamma$1(10) mN/m, a dynamic surface tension of the first ink at 1,000 ms is defined as $\gamma$1(10) mN/m, and a dynamic surface tension of the second ink at 10 ms is defined as $\gamma$2(10) mN/m, both the $\gamma$1(10) and $\gamma$2(10) are 35 or less, and Expressions 6 and 7 are satisfied,

$$0 \leq \gamma2(10) - \gamma1(10) \ldots (6)$$

$$0 \leq \gamma2(10) - \gamma1(1{,}000) \leq 3.0 \ldots (7).$$

<12> The ink set according to <11>, in which the first ink and the second ink are two inks selected from the group consisting of a yellow ink, a magenta ink, a cyan ink, and a black ink.

<13> The ink set according to <11> or <12>, in which both the first ink and the second ink contain a silicone-based surfactant as the surfactant.

<14> The ink set according to <13>, in which a content of the silicone-based surfactant in the first ink is 0.4% by mass or greater with respect to a total amount of the first ink, and a content of the silicone-based surfactant in the second ink is 0.4% by mass or greater with respect to a total amount of the second ink.

<15> The inkjet recording method according to <13> or <14>, in which the silicone-based surfactant has a structure represented by Formula 3,

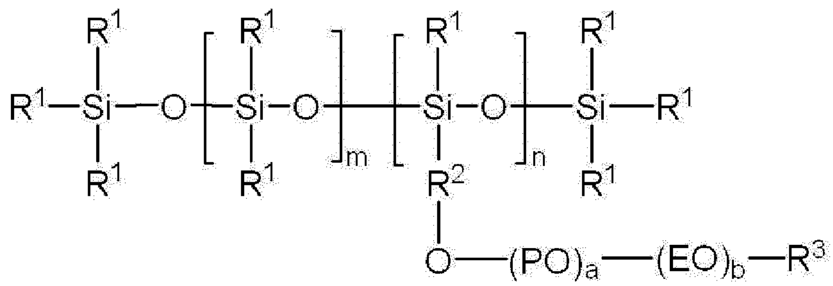

(3)

in Formula 3, $R^1$'s each independently represent an alkyl group having 1 to 3 carbon atoms or a hydroxy group, $R^2$ represents an alkanediyl group having 2 to 5 carbon atoms, $R^3$ represents a hydrogen atom, an alkyl group having 1 to 3 carbon atoms, or a hydroxy group, PO represents a propyleneoxy group, and EO represents an ethyleneoxy group, and a, b, m, and n represent an average addition mole number of each unit, where a is in a range of 0 to 10, b is in a range of 1 to 50, m is in a range of 1 to 500, and n is in a range of 1 to 50.

<16> The ink set according to <15>, in which in Formula 3, a is 0, b is in a range of 1 to 15, m is in a range of 1 to 10, and n is in a range of 1 to 5.

According to the present disclosure, it is possible to provide an inkjet recording method and an ink set which enable recording of an image with suppressed intercolor mixing.

DESCRIPTION OF THE PREFERRED EMBODIMENTS

In the present specification, a numerical range shown using "to" indicates a range including the numerical values described before and after "to" as a minimum value and a maximum value, respectively.

In a numerical range described in a stepwise manner in the present specification, an upper limit or a lower limit described in a certain numerical range may be replaced with an upper limit or a lower limit in another numerical range described in a stepwise manner. Further, in a numerical range described in the present disclosure, an upper limit or a lower limit described in a certain numerical range may be replaced with a value described in an example.

In the present disclosure, in a case where a plurality of substances corresponding to respective components in a composition are present, the amount of the respective components in the composition indicates the total amount of the plurality of substances present in the composition unless otherwise specified.

In the present specification, a combination of two or more preferred embodiments is a more preferred embodiment.

In the present disclosure, the meaning of the term "step" includes not only an independent step but also a step whose intended purpose is achieved even in a case where the step is not clearly distinguished from other steps.

In the present specification, the term "image" denotes general films, and the term "image recording" denotes formation of the image (that is, the film). In addition, the concept of "image" in the present specification also includes a solid image.

In the present specification, "(meth)acrylate" is a concept including both acrylate and methacrylate, "(meth)acryloyl group" is a concept including both acryloyl group and methacryloyl group, and "(meth)acrylic acid" has a concept including both acrylic acid and methacrylic acid.

[Inkjet recording method]

An ink jet recording method of the present disclosure includes a step of jetting a first ink from a first inkjet head to a recording medium, and a step of jetting a second ink having a hue different from a hue of the first ink, from a second ink jet head to a region of the recording medium onto which the first ink has been applied, in which in a case where a time taken from the jetting of the first ink from the first ink jet head to the jetting of the second ink from the second ink jet head is defined as T ms, a dynamic surface tension of the first ink at T ms is defined as $\gamma1(T)$ mN/m, a dynamic surface tension of the first ink at 10 ms is defined as $\gamma1(10)$ mN/m, and a dynamic surface tension of the second ink at

10 ms is defined as $\gamma 2(10)$ mN/m, Expressions 1 and 2 are satisfied.

$$0 \leq \gamma 2(10) - \gamma 1(T) \leq 3.0 \ldots (1)$$

$$0 \leq \gamma 2(10) - \gamma 1(10) \ldots (2)$$

In the present disclosure, the dynamic surface tension is measured by a maximum foam pressure method in an environment of 23°C and 55% RH, for example, using a maximum foam pressure method dynamic surface tension meter BP100 (manufactured by KRUSS GmbH). The dynamic surface tension at 10 ms is a surface tension calculated from the maximum foam pressure in a case where the time from when bubbles are continuously jetted from the probe capillary tube inserted into an ink and a new interface is formed in the tip of the probe capillary tube (0 ms) to when the maximum foam pressure is obtained is 10 ms.

Further, the dynamic surface tension at 10 ms is a value closest to the dynamic surface tension at the moment of liquid droplets of the ink landing on a recording medium among the dynamic surface tensions that can be actually measured with high reliability by the current techniques. The dynamic surface tension at 10 ms approximately corresponds to the dynamic surface tension at a time point of liquid droplets of the ink landing on a recording medium.

According to the inkjet recording method of the present disclosure, an image in which intercolor mixing is suppressed can be recorded.

The reason why such an effect is exhibited is assumed as follows.

The surface tension (dynamic surface tension) of the first ink jetted from the first inkjet head starts to decrease from the moment of jetting of the first ink and continuously decreases even after landing of the ink, and eventually converges to a value of the static surface tension of the first ink. The rate of a decrease in the surface tension is greatest immediately after jetting of the ink and gradually decreases as the time elapses after the jetting (that is, a decrease in surface tension gradually slows down).

The present inventors have paid attention to the dynamic surface tension of the first ink and the dynamic surface tension of the second ink at the time point of landing of the second ink in a case where the first ink is jetted from the first inkjet head and then the second ink is jetted from the second inkjet head. In a case where inks having different dynamic surface tensions come into contact with each other, the ink with a lower dynamic surface tension is attracted to the ink with a higher dynamic surface tension. For example, in a case where a solid image is recorded using the first ink and a line pattern image is recorded on the solid image using the second ink, the second ink is not attracted to the first ink side in a case where "$\gamma 2(10) - \gamma 1(T)$" is 0 or greater. It is found that the second ink is unlikely to spread on the solid image recorded with the first ink, and thus intercolor mixing is suppressed. Further, for example, in a case where a line pattern image is recorded using the first ink and a solid image is recorded on the line pattern image using the second ink, the first ink is unlikely to be attracted to the second ink side in a case where "$\gamma 2(10) - \gamma 1(T)$" is 3.0 or less. Therefore, it is found that intercolor mixing is suppressed.

Further, in a case where "$\gamma 2(10) - \gamma 1(10)$" is 0 or greater, a state where the dynamic surface tension of the second ink is greater than the dynamic surface tension of the first ink tends to be maintained even after a lapse of time from jetting of the first ink and the second ink. It is found that in a case where a solid image is recorded using the first ink and a line pattern image is recorded on the solid image using the second ink, the second ink is unlikely to spread on the solid image recorded with the first ink, and thus intercolor mixing is suppressed.

Meanwhile, in the inkjet recording method described in JP2017-8319A, "$\gamma 2(10) - \gamma 1(T)$" is greater than 3.0, and thus the effect of suppressing intercolor mixing is considered to be insufficient. Further, the image recording method described in WO2020/203088Ais an image recording method using two kinds of inks having hues that are the same as each other, and the technical ideas thereof are different from those of the present disclosure. Therefore, in the image recording method disclosed in WO2020/203088A, "$\gamma 2(10) - \gamma 1(10)$" is set to less than 0.

Hereinafter, each step of the inkjet recording method of the present disclosure will be described.

<First ink jetting step>

The ink jet recording method of the present disclosure includes a step of jetting the first ink from the first ink jet head to a recording medium (hereinafter, also referred to as "first ink jetting step").

(Recording medium)

The recording medium is not particularly limited, and examples thereof include so-called coated paper used for general offset printing and the like. The coated paper is provided with a coating layer obtained by applying a coating

material to a surface of high-quality paper, alkaline paper, or the like, which is mainly formed of cellulose and is not generally surface-treated.

The coated paper may be generally available on the market. As the coated paper, for example, coated paper for general printing can be used, and specific examples thereof include coated paper (A2, B2) such as "OK TOPCOAT+" (manufactured by OJI PAPER CO., LTD.), and "AURORA COAT" and "ULITE" (manufactured by NIPPON PAPER INDUSTRIES CO., LTD.), and art paper (A1) such as "TOKUBISHI ART" (manufactured by MITSUBISHI PAPER MILLS LIMITED).

The recording medium may be a low water absorption recording medium or a non-water absorption recording medium.

In the present disclosure, the low water absorption recording medium refers to a recording medium having a water absorption coefficient Ka of 0.05 $mL/m^2 \cdot ms^{1/2}$ to 0.5 $mL/m^2 \cdot ms^{1/2}$, preferably 0.1 $mL/m^2 \cdot ms^{1/2}$ to 0.4 $mL/m^2 \cdot ms^{1/2}$ and more preferably 0.2 $mL/m^2 \cdot ms^{1/2}$ to 0.3 $mL/m^2 \cdot ms^{1/2}$.

In addition, the non-water absorption recording medium refers to a recording medium having a water absorption coefficient Ka of less than 0.05 $mL/m^2 \cdot ms^{1/2}$.

The water absorption coefficient Ka is synonymous with one described in JAPAN TAPPI Pulp and Paper Test Method No. 51:2000 (published by Pulp and Paper Technology Association). Specifically, the absorption coefficient Ka is calculated from the difference in amount of water transfer between the contact time of 100 ms and the contact time of 900 ms, using an automatic scanning absorptometer KM500Win (manufactured by KUMAGAI RIKI KOGYO Co., Ltd.).

A resin base material is preferable as the non-water absorption recording medium. Examples of the resin base material include a base material obtained by molding a thermoplastic resin in a sheet shape.

It is preferable that the resin base material contains polypropylene, polyethylene terephthalate, nylon, polyethylene, or polyimide.

The resin base material may be a transparent resin base material or a colored resin base material, or at least a part thereof may be subjected to a metal vapor deposition treatment or the like.

The shape of the resin base material is not particularly limited, but a sheet-like resin base material is preferable. From the viewpoint of the productivity of the printed material, a sheet-like resin base material which is capable of forming a roll by being wound is more preferable.

(First ink)

The hue of the first ink to be jetted in the first ink jetting step is not particularly limited, and any of an achromatic ink (such as a black ink or a white ink) or a chromatic ink (such as a yellow ink, a magenta ink, or a cyan ink) may be used.

Among these, from the viewpoint of general-purpose properties, a yellow ink, a magenta ink, a cyan ink, or a black ink is preferable as the first ink. The yellow ink, the magenta ink, the cyan ink, and the black ink typically contain a colorant exhibiting each color.

- Colorant -

It is preferable that the first ink contains a colorant.

Examples of the colorant include a dye and a pigment. Among the examples, from the viewpoint of durability such as heat resistance, light fastness, and water resistance, a pigment is preferable as the colorant.

In a case where a pigment is used as the colorant, the ink can contain the pigment as a pigment dispersion liquid. The pigment dispersion liquid is a liquid obtained by dispersing the pigment in a liquid medium using a dispersing agent, and contains at least the pigment, the dispersing agent, and the liquid medium. The details of the dispersing agent will be described later. Further, the liquid medium may be water or an organic solvent.

In addition, the pigment may be an organic pigment or an inorganic pigment.

Examples of the organic pigment include an azo pigment, a polycyclic pigment, a chelate dye, a nitro pigment, a nitroso pigment, and aniline black. Among these, an azo pigment or a polycyclic pigment is preferable as the organic pigment.

Examples of the azo pigment include azo lake, an insoluble azo pigment, a condensed azo pigment, and a chelated azo pigment.

Examples of the polycyclic pigment include a phthalocyanine pigment, a perylene pigment, a perinone pigment, an anthraquinone pigment, a quinacridone pigment, a dioxazine pigment, an indigo pigment, a thioindigo pigment, an isoindolinone pigment, and a quinophthalone pigment.

Examples of the chelate dye include a basic dye-type chelate and an acid dye-type chelate.

Examples of the inorganic pigment include titanium oxide, iron oxide, calcium carbonate, barium sulfate, aluminum hydroxide, barium yellow, cadmium red, chrome yellow, and carbon black.

Examples of the pigment include pigments described in "Encyclopedia of Pigments" edited by Seishiro Ito

(2000), "Industrial Organic Pigments", W. Herbst, K. Hunger, JP2002-12607A, JP2002-188025A, JP2003-26978A, and JP2003-342503A.

The volume average particle diameter of the pigment is preferably in a range of 10 nm to 200 nm, more preferably in a range of 10 nm to 150 nm, and still more preferably in a range of 10 nm to 100 nm. In a case where the volume average particle diameter thereof is 200 nm or less, the color reproducibility is satisfactory, and the jettability is improved in a case where an image is recorded by an ink jet recording method. In a case where the volume average particle diameter is 10 nm or greater, the light fastness is satisfactory.

Further, the particle size distribution of the pigment is not particularly limited, and may be any of a wide particle size distribution or a monodispersed particle size distribution. In addition, two or more pigments having a monodispersed particle size distribution may be used in the form of a mixture.

The volume average particle diameter and the particle size distribution of the pigment are values measured by a particle size distribution measuring device (for example, MICROTRAC UPA (registered trademark) EX150, manufactured by Nikkiso Co., Ltd.).

The content of the colorant is preferably in a range of 1% by mass to 20% by mass and more preferably in a range of 1% by mass to 10% by mass with respect to the total amount of the first ink.

- Pigment dispersing agent -

In a case where the first ink contains a pigment, it is preferable that the first ink contains a pigment dispersing agent in order to disperse the pigment in water. In the present disclosure, the pigment dispersing agent is a compound having a function of dispersing the pigment. The pigment dispersing agent is adsorbed on the surface of the pigment and applied to at least a part of the surface of the pigment, and thus the pigment can be dispersed in water. Further, in a case where a self-dispersing pigment that can be dispersed in water even in the absence of a pigment dispersing agent is used as the white pigment, the ink may not contain a pigment dispersing agent.

The form of the pigment dispersing agent contained in the first ink is not particularly limited and may be any of a random polymer, a block polymer, or a graft polymer. Further, the pigment dispersing agent may be a polymer having a crosslinking structure. Among the forms, it is preferable that the pigment dispersing agent is a polymer having a crosslinking structure. It is considered that in a case where the pigment dispersing agent is a polymer having a crosslinking structure, the pigment dispersing agent is unlikely to be released from the surface of the pigment, and thus the dispersion stability of the pigment is high.

In the present disclosure, the polymer denotes a compound having a weight-average molecular weight of 1,000 or greater.

In the present disclosure, the weight-average molecular weight (Mw) denotes a value measured by gel permeation chromatography (GPC). The measurement according to gel permeation chromatography (GPC) is performed using HLC (registered trademark)-8020GPC (manufactured by Tosoh Corporation) as a measuring device, three columns of TSKgel (registered trademark) Super Multipore HZ-H (manufactured by Tosoh Corporation, 4.6 mmID $\times$ 15 cm), and tetrahydrofuran (THF) as an eluent. Further, the measurement is performed under measurement conditions of a sample concentration of 0.45% by mass, a flow rate of 0.35 ml/min, a sample injection volume of 10 $\mu$l, and a measurement temperature of 40°C using an RI detector. Further, the calibration curve is prepared using eight samples of "F-40", "F-20", "F-4", "F-1", "A-5000", "A-2500", "A-1000", and "n-propylbenzene" which are "Standard Samples TSK standard, polystyrene" (manufactured by Tosoh Corporation).

The polymer having a crosslinking structure is not particularly limited as long as the polymer is a polymer having at least one crosslinking structure in a molecule.

Whether or not the polymer contained in the ink has a crosslinking structure can be determined, for example, by the following method. First, the polymer is separated from the ink by a separation method such as solvent extraction. The presence or absence of the crosslinking structure can be comprehensively determined by analyzing the separated polymer using various analysis methods such as a nuclear magnetic resonance method (NMR), an infrared spectroscopy method (IR), and a thermal analysis method.

The polymer having a crosslinking structure (hereinafter, also referred to as "crosslinked polymer") is formed, for example, by crosslinking an uncrosslinked polymer (hereinafter, also referred to as "uncrosslinked polymer") with a crosslinking agent. It is preferable that the uncrosslinked polymer is a water-soluble polymer.

In the present disclosure, the term "water-soluble" indicates a property in which 1 g or greater of a substance is dissolved in 100 g of water at 25°C. As the term "water-soluble" property, a property in which 3 g or greater (more preferably 10 g or greater) of a substance is dissolved in 100 g of water at 25°C is preferable.

Even in a case where the uncrosslinked polymer is water-soluble, the crosslinked polymer is not necessarily water-soluble.

Examples of the uncrosslinked polymer include a vinyl resin, an acrylic resin, a urethane resin, and a polyester resin. Among these, an acrylic resin is preferable as the uncrosslinked polymer.

It is preferable that the uncrosslinked polymer is a polymer containing a functional group that can be crosslinked by a crosslinking agent. Examples of the crosslinkable functional group include a carboxy group or a salt thereof, an isocyanate group, and an epoxy group. Among these, from the viewpoint of improving the dispersibility of the pigment, a carboxy group or a salt thereof is preferable, and a carboxy group is particularly preferable as the crosslinkable functional group. That is, a polymer containing a carboxy group is preferable as the uncrosslinked polymer.

It is preferable that the uncrosslinked polymer is a copolymer having a structural unit derived from a monomer containing a carboxy group (hereinafter, referred to as "carboxy group-containing monomer"). The structural unit derived from a carboxy group-containing monomer contained in a copolymer may be used alone or two or more kinds thereof. The copolymer may be a random copolymer or a block copolymer, but is preferably a random copolymer.

Examples of the carboxy group-containing monomer include (meth)acrylic acid, β-carboxyethyl acrylate, fumaric acid, itaconic acid, maleic acid, and crotonic acid.

From the viewpoints of the crosslinking properties and the dispersibility, (meth)acrylic acid or β-carboxyethyl acrylate is preferable, and (meth)acrylic acid is more preferable as the carboxy group-containing monomer.

The content of the structural unit derived from a carboxy group-containing monomer is preferably in a range of 5% by mass to 40% by mass, more preferably in a range of 10% by mass to 35% by mass, and still more preferably in a range of 10% by mass to 30% by mass with respect to the total amount of the uncrosslinked polymer.

It is preferable that the uncrosslinked polymer has a structural unit derived from a hydrophobic monomer in addition to the structural unit derived from a carboxy group-containing monomer. The structural unit derived from a hydrophobic monomer contained in the copolymer may be used alone or two or more kinds thereof.

Examples of the hydrophobic monomer include (meth)acrylate containing an alkyl group having 1 to 20 carbon atoms, (meth)acrylate having an aromatic ring (such as benzyl (meth)acrylate or phenoxyethyl (meth)acrylate), styrene, and a styrene derivative.

The content of the structural unit derived from a hydrophobic monomer is preferably in a range of 60% by mass to 95% by mass, more preferably in a range of 65% by mass to 90% by mass, and still more preferably in a range of 70% by mass to 90% by mass with respect to the total amount of the uncrosslinked polymer.

The uncrosslinked polymer is preferably a random copolymer having a structural unit derived from a carboxy group-containing monomer and at least one of a structural unit derived from a (meth)acrylate containing an alkyl group having 1 to 20 carbon atoms or a structural unit derived from a (meth)acrylate having an aromatic ring, more preferably a random copolymer having a structural unit derived from (meth)acrylic acid and a structural unit derived from a (meth)acrylate having an aromatic ring, and still more preferably a copolymer having a structural unit derived from (meth)acrylic acid and a structural unit derived from benzyl (meth)acrylate.

The weight-average molecular weight (Mw) of the uncrosslinked polymer is not particularly limited, but is preferably in a range of 3,000 to 300,000, more preferably in a range of 5,000 to 200,000, and still more preferably in a range of 7,000 to 100,000 from the viewpoint of the dispersibility of the white pigment.

The preferable ranges of the weight-average molecular weight of the crosslinked polymer are the same as the preferable ranges of the weight-average molecular weight of the uncrosslinked polymer.

In the present disclosure, the weight-average molecular weight (Mw) is measured by gel permeation chromatography (GPC). The measurement by GPC is performed using HLC-8220GPC (manufactured by Tosoh Corporation) by connecting three columns of TSKgeL SuperHZM-H, TSKgeL SuperHZ4000, and TSKgel SuperHZ2000 (all trade names, manufactured by Tosoh Corporation) in series, and tetrahydrofuran (THF) is used as an eluent. Further, the measurement is performed under conditions of a sample concentration of 0.45% by mass, a flow rate of 0.35 ml/min, a sample injection volume of 10 μl, and a measurement temperature of 40°C using a differential refractive index detector. Further, the calibration curve is prepared using eight samples of "F-40", "F-20", "F-4", "F-1", "A-5000", "A-2500", "A-1000", and "n-propylbenzene" which are "Standard Samples TSK standard, polystyrene" (manufactured by Tosoh Corporation).

It is preferable that the crosslinking agent used in a case of crosslinking the uncrosslinked polymer is a compound having two or more reaction sites with the uncrosslinked polymer (for example, a polymer containing a carboxy group). The crosslinking agent may be used alone or in combination of two or more kinds thereof.

As a combination of the crosslinking agent and the uncrosslinked polymer, a combination of a compound containing two or more epoxy groups (that is, a bi- or higher functional epoxy compound) and a polymer containing a carboxy group is preferable. In this combination, a crosslinking structure is formed by the reaction between the epoxy group and the carboxy group. It is preferable that the crosslinking structure is formed by the crosslinking agent after the pigment is dispersed by the uncrosslinked polymer.

Examples of the bi- or higher functional epoxy compound include ethylene glycol diglycidyl ether, polyethylene glycol diglycidyl ether, 1,6-hexanediol diglycidyl ether, diethylene glycol diglycidyl ether, polyethylene glycol diglycidyl ether, dipropylene glycol diglycidyl ether, polypropylene glycol diglycidyl ether, and trimethylolpropane triglycidyl ether.

Among these, polyethylene glycol diglycidyl ether, diethylene glycol diglycidyl ether, or trimethylolpropane triglycidyl ether is preferable as the bi- or higher functional epoxy compound.

Commercially available products may be used as the crosslinking agent.

Examples of the commercially available products include Denacol EX-321, EX-821, EX-830, EX-850, and EX-851 (manufactured by Nagase ChemteX Corporation).

From the viewpoints of the crosslinking reaction rate and the dispersion stability after crosslinking, the molar ratio between a reaction site (for example, an epoxy group) in the crosslinking agent and a reaction site (for example, a carboxy group) in the uncrosslinked polymer is preferably in a range of 1:1.1 to 1:10, more preferably in a range of 1:1.1 to 1:5, and still more preferably in a range of 1:1.1 to 1:3.

The mixing ratio between the pigment and the pigment dispersing agent is preferably in a range of 1:0.02 to 1:2, more preferably in a range of 1:0.03 to 1:1.5, and still more preferably in a range of 1:0.04 to 1:1 in terms of the mass.

- Water -

It is preferable that the first ink contains water. That is, it is preferable that the first ink is an aqueous ink.

The content of water is preferably in a range of 10% by mass to 99% by mass, more preferably in a range of 20% by mass to 80% by mass, and still more preferably in a range of 30% by mass to 70% by mass with respect to the total amount of the first ink.

- Organic solvent -

It is preferable that the first ink contains at least one organic solvent.

The kind of the organic solvent is not limited, and examples thereof include a monoalcohol having 1 to 6 carbon atoms; a diol such as 1,3-propanediol, 1,3-butanediol, 1,4-butanediol, 2-butene-1,4-diol, 2-ethyl-1,3-hexanediol, 2-methyl-2,4-pentanediol, 1,2-octanediol, 1,2-hexanediol, 1,2-pentanediol, 1,2-butanediol, or 4-methyl-1,2-pentanediol; a triol such as glycerin, 1,2,6-hexanetriol, or trimethylolpropane; alkylene glycol such as ethylene glycol or propylene glycol; alkylene glycol monoalkyl ether such as ethylene glycol monoalkyl ether or propylene glycol monoalkyl ether; polyalkylene glycol such as diethylene glycol, triethylene glycol, tetraethylene glycol, pentaethylene glycol, dipropylene glycol, or polyoxyethylene polyoxypropylene glycol; polyalkylene glycol ether such as diethylene glycol monoalkyl ether, triethylene glycol monoalkyl ether, tetraethylene glycol monoalkyl ether, tripropylene glycol monoalkyl ether, or polyoxypropylene glyceryl ether; dialkyl ether of polyalkylene glycol such as diethylene glycol dialkyl ether, triethylene glycol dialkyl ether, or dipropylene glycol dialkyl ether; 2-pyrrolidone, and N-methyl-2-pyrrolidone.

The content of the organic solvent is preferably in a range of 10% by mass to 40% by mass and more preferably in a range of 20% by mass to 35% by mass with respect to the total amount of the first ink.

- Resin particles -

It is preferable that the first ink contains at least one kind of resin particles.

In the present disclosure, the resin particles contain a resin and may contain a core agent or the like other than the resin, but it is preferable that the resin particles consist of only the resin.

As the resin particles, particles consisting of an acrylic resin, particles consisting of a polyester resin, particles consisting of a polyurethane resin, or particles consisting of a polyolefin resin are preferable, and particles consisting of an acrylic resin are more preferable.

Specific examples of the resin particles include resin particles described in paragraphs 0111 to 0114 of WO2021/192720A.

The content of the resin particles is preferably in a range of 0% by mass to 10% by mass and more preferably in a range of 0.5% by mass to 5% by mass with respect to the total amount of the first ink.

- Surfactant -

It is preferable that the first ink contains at least one surfactant.

The kind of the surfactant is not particularly limited, and may be any of an anionic surfactant, a cationic surfactant, a betaine-based surfactant, or a nonionic surfactant. Further, examples of the surfactant include an acrylic surfactant, a fluorine-based surfactant, and a silicone-based surfactant.

Among these, it is preferable that the first ink contains a silicone-based surfactant. The dynamic surface tension of the first ink is decreased with an elapse of time. In a case where the first ink contains a silicone-based surfactant, since the dynamic surface tension of the first ink gradually decreases with an elapse of time, Expression 1 is easily satisfied.

It is preferable that the silicone-based surfactant has a structure represented by Formula 3.

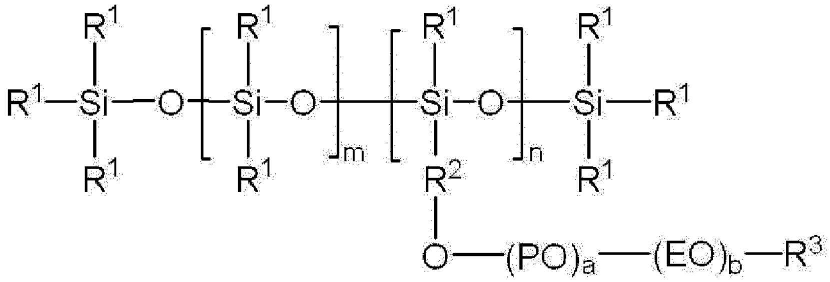

(3)

In Formula 3, $R^1$'s each independently represent an alkyl group having 1 to 3 carbon atoms or a hydroxy group, $R^2$ represents an alkanediyl group having 2 to 5 carbon atoms, $R^3$ represents a hydrogen atom, an alkyl group having 1 to 3 carbon atoms, or a hydroxy group, PO represents a propyleneoxy group, and EO represents an ethyleneoxy group, and a, b, m, and n represent an average addition mole number of each unit, where a is in a range of 0 to 10, b is in a range of 1 to 50, m is in a range of 1 to 500, and n is in a range of 1 to 50.

Further, in Formula 3, the alignment of PO and EO may be an alignment of block copolymers or an alignment of random copolymers.

In Formula 3, an alignment of a structural unit with a subscript m and a structural unit with a subscript n may be an alignment of block copolymers or an alignment of random copolymers.

$R^1$ represents preferably an alkyl group having 1 to 3 carbon atoms and more preferably a methyl group.

$R^2$ represents preferably an alkanediyl group having 3 or 4 carbon atoms and more preferably a trimethylene group.

$R^3$ represents preferably an alkyl group having 1 to 3 carbon atoms and more preferably a methyl group.

It is more preferable that a is 0, b is in a range of 1 to 15, m is in a range of 1 to 10, and n is in a range of 1 to 5. Further, it is still more preferable that a is 0, b is in a range of 3 to 10, m is in a range of 1 to 3, and n is in a range of 1 to 3.

The silicone-based surfactant may be a commercially available product. Examples of the commercially available product include BYK-302, BYK-307, BYK-331, BYK-333, BYK-345, BYK-347, BYK-348, BYK-349, BYK-378, BYK-3400, BYK-3450, BYK-3451, BYK-3455, and BYK-3760 (all manufactured by BYK-Chemie GmbH), KF-351A, KF-352A, KF-353, KF-354L, KF-355A, KF-615A, KF-945, KF-640, KF-642, KF-643, KF-644, KF-6011, KF-6012, KF-6015, KF-6017, and KF-6020 (all manufactured by Evonik Industries AG).

From the viewpoint of suppressing intercolor bleeding, the content of the silicone-based surfactant is preferably 0.4% by mass or greater and more preferably 0.6% by mass or greater with respect to the total amount of the first ink. The upper limit of the content of the silicone-based surfactant is not particularly limited, and is, for example, 1.5% by mass.

-Additive-

The first ink may contain, as necessary, known additives such as colloidal silica, an inorganic salt, a solid wetting agent (urea or the like), a fading inhibitor, an emulsion stabilizer, a penetration enhancer, an ultraviolet absorbing agent, a preservative, a fungicide, a pH adjuster, an antifoaming agent, a viscosity adjuster, a dispersion stabilizer, a rust inhibitor, a chelating agent, and a water-soluble polymer compound.

- Physical properties of first ink -

[Dynamic surface tension]

The first ink has a dynamic surface tension of preferably 38 mN/m or less and more preferably 35 mN/m or less at 10 ms. The lower limit of the dynamic surface tension of the first ink at 10 ms is not particularly limited, and is, for example, 28 mN/m.

The dynamic surface tension of the first ink at 10 ms is a value closest to the dynamic surface tension at the moment of the ink droplets landing on the recording medium. In a case where the dynamic surface tension of the first ink at 10 ms is 38 mN/m or less, ink droplets spread on the recording medium, and thus landing interference can be suppressed. An image which is unlikely to cause image density unevenness and has an excellent image quality can be obtained.

[Viscosity]

The viscosity of the first ink is preferably in a range of 1.2 mPa·s to 15.0 mPa·s, more preferably in a range of

2.0 mPa·s to 13.0 mPa·s, and still more preferably in a range of 2.5 mPa s to 10.0 mPa·s.

The viscosity of the first ink is measured at a temperature of 30°C using a rotational viscometer, for example, "VISCOMETER TV-22" (product name, manufactured by Toki Sangyo Co., Ltd.).

[pH]

From the viewpoint of the storage stability of the first ink, the pH of the first ink is preferably in a range of 6.0 to 11.0, more preferably in a range of 7.0 to 10.0, and still more preferably in a range of 7.0 to 9.5.

The pH of the first ink is measured at a temperature of 25°C using a pH meter, for example, "WM-50EG" (product name, manufactured by DKK-TOA Corporation).

(Method of jetting first ink)

A known ink jet recording method can be used as a method of jetting the first ink from the first ink jet head. Examples of the ink jet recording method include an electric charge control method of jetting an ink by using an electrostatic attraction force, a drop-on-demand method (pressure pulse method) of using a vibration pressure of a piezoelectric element, an acoustic ink jet method of converting an electric signal into an acoustic beam, irradiating an ink with the acoustic beam, and jetting the ink using a radiation pressure, and a thermal ink jet (Bubble jet (registered trademark)) method of heating an ink to form air bubbles and utilizing the generated pressure.

Examples of the inkjet heads used in the inkjet recording method include a shuttle type inkjet head in which a short serial head is used to perform recording while the head is allowed to scan a base material in a width direction, and a line type ink jet head that uses a line head in which recording elements are aligned in the entire area on one side of a base material.

In the line type inkjet head, pattern formation can be performed on the entire surface of a base material by scanning the base material in a direction intersecting an alignment direction of recording elements, and a transport system such as a carriage that scans a short head is unnecessary. Further, in the line type ink jet head, complicated scanning control for moving a carriage and a base material is not necessary, and only a base material moves. Therefore, the recording speed can be further increased in the line type ink jet head than the shuttle type ink jet head.

The liquid droplet volume of the first ink jetted from the first ink jet head is preferably in a range of 1 pL (picoliter) to 100 pL, more preferably in a range of 1.5 pL to 80 pL, and still more preferably in a range of 1.8 pL to 50 pL.

<Second ink jetting step>

The ink jet recording method according to the present disclosure includes a step of jetting the second ink having a hue different from the hue of the first ink, from a second inkjet head to a region of the recording medium onto which the first ink has been applied (hereinafter, also referred to as "second ink jetting step").

(Second ink)

The second ink to be jetted in the second ink jetting step is not particularly limited as long as the second ink has a hue different from the hue of the first ink, and any of an achromatic ink (such as a black ink or a white ink) or a chromatic ink (such as a yellow ink, a magenta ink, or a cyan ink) may be used.

Among these, from the viewpoint of general-purpose properties, a yellow ink, a magenta ink, a cyan ink, or a black ink is preferable as the second ink.

That is, it is preferable that the first ink and the second ink are two inks selected from the group consisting of a yellow ink, a magenta ink, a cyan ink, and a black ink.

Examples of the components contained in the second ink include the same components as those contained in the first ink, and the preferable aspects thereof are the same as described above.

Particularly, from the viewpoint of further suppressing intercolor bleeding, it is preferable that both the first ink and the second ink contain a silicone-based surfactant.

The content of the silicone-based surfactant in the second ink is preferably 0.4% by mass or greater and more preferably 0.6% by mass or greater with respect to the total amount of the second ink. The upper limit of the content of the silicone-based surfactant is not particularly limited, and is, for example, 1.5% by mass.

The preferable ranges of the dynamic surface tension, the viscosity, and the pH of the second ink after 10 ms are the same as the preferable ranges of the dynamic surface tension, the viscosity, and the pH of the first ink after 10 ms.

(Method of jetting second ink)

A method of jetting the second ink is the same as the method of jetting the first ink.

The second ink is jetted to a region of the recording medium to which the first ink has been applied. In a case where the ink is jetted to the recording medium, the ink lands on the recording medium to form ink dots which are solidified substances of the ink. The expression of "region of the recording medium to which the first ink has been applied" denotes a region where first ink dots formed by the first ink landing on the recording medium are present. In the second ink jetting step, the second ink may be jetted to at least a region of the recording medium to which the first ink has been applied or may be jetted to a region of the recording medium where the first ink has not been applied. A region where the first ink and the second ink are applied in an overlapping manner is formed on the recording medium by performing the second ink jetting step after the first ink jetting step. The expression of "region where the first ink and the second ink are applied in an overlapping manner" denotes a region where the first ink dots overlap with the second ink dots formed by the second ink landing on the first ink dots.

<Expression 1 and Expression 2>

In the ink jet recording method of the present disclosure, in a case where a time (hereinafter, also referred to as "jet interval T") taken from the jetting of the first ink from the first inkjet head to the jetting of the second ink from the second inkjet head is defined as T ms, a dynamic surface tension of the first ink at T ms is defined as $\gamma 1(T)$ mN/m, a dynamic surface tension of the first ink at 10 ms is defined as $\gamma 1(10)$ mN/m, and a dynamic surface tension of the second ink at 10 ms is defined as $\gamma 2(10)$ mN/m, Expressions 1 and 2 are satisfied.

$$0 \leq \gamma 2(10) - \gamma 1(T) \leq 3.0 \ldots (1)$$

$$0 \leq \gamma 2(10) - \gamma 1(10) \ldots (2)$$

As shown in Expression 1, in a case where "y2(10) - $\gamma 1(T)$" (that is, a value obtained by subtracting the dynamic surface tension of the first ink at T ms from the dynamic surface tension of the second ink at 10 ms) is 0 or greater, the second ink is unlikely to spread after landing, and thus intercolor bleeding is suppressed. Further, in a case where "y2(10) - $\gamma 1(T)$" is 3.0 or less, movement of the ink due to a difference between the dynamic surface tension of the first ink and the dynamic surface tension of the second ink is suppressed, and thus intercolor bleeding is suppressed.

As shown in Expression 2, in a case where "$\gamma 2(10) - \gamma 1(10)$" (that is, a value obtained by subtracting the dynamic surface tension of the first ink at 10 ms from the dynamic surface tension of the second ink at 10 ms) is 0 or greater, a state where the dynamic surface tension of the second ink is greater than the dynamic surface tension of the first ink is maintained even after a lapse of time from jetting of the first ink and the second ink, and thus intercolor bleeding is suppressed.

Further, the upper limit of '$\gamma 2(10) - \gamma 1(10)$" is not particularly limited, but is preferably 2.0 in order to satisfy Expression 1. That is, it is preferable to satisfy Expression 2'.

$$0 \leq \gamma 2(10) - \gamma 1(10) \leq 2.0 \ldots (2')$$

<Jet interval T>

In the inkjet recording method according to the present disclosure, the jet interval T is preferably in a range of 80 ms to 1,000 ms from the viewpoint of the productivity.

<Third ink jetting step>

It is preferable that the ink jet recording method of the present disclosure further includes a step of jetting a third ink having a hue different from the hues of the first ink and the second ink, from a third ink jet head to a region of the recording medium onto which the first ink and the second ink have been applied in an overlapping manner (hereinafter, also referred to as "third ink jetting step"). The color reproducibility is improved by performing the first ink jetting step, the second ink jetting step, and the third ink jetting step.

(Third ink)

The third ink to be jetted in the third ink jetting step is not particularly limited as long as the third ink has a hue different from the hues of the first ink and the second ink, and any of an achromatic ink (such as a black ink or a white ink) or a chromatic ink (such as a yellow ink, a magenta ink, or a cyan ink) may be used.
Among these, from the viewpoint of general-purpose properties, a yellow ink, a magenta ink, a cyan ink, or a black ink is preferable as the third ink.
That is, it is preferable that the first ink, the second ink, and the third ink are three inks selected from the group consisting of a yellow ink, a magenta ink, a cyan ink, and a black ink.
Examples of the components contained in the third ink include the same components as those contained in the first ink, and the preferable aspects thereof are the same as described above.
The preferable ranges of the dynamic surface tension, the viscosity, and the pH of the third ink after 10 ms are the same as the preferable ranges of the dynamic surface tension, the viscosity, and the pH of the first ink after 10 ms.

(Method of jetting third ink)

A method of jetting the third ink is the same as the method of jetting the first ink.
The third ink is jetted to a region of the recording medium to which the first ink and the second ink have been applied in an overlapping manner. In the third ink jetting step, the third ink may be jetted to at least a region of the recording medium to which the first ink and the second ink have been applied in an overlapping manner or may be jetted to a region other than the region of the recording medium to which the first ink and the second ink have been applied in an overlapping manner.

<Expression 4 and Expression 5>

In the inkjet recording method of the present disclosure, it is preferable that in a case where a time (hereinafter, also referred to as "jet interval TX") taken from the jetting of the second ink from the second inkjet head to the jetting of the third ink from the third inkjet head is defined as TX ms, a dynamic surface tension of the second ink at TX ms is defined as γ2(TX) mN/m, a dynamic surface tension of the second ink at 10 ms is defined as γ2(10) mN/m, and a dynamic surface tension of the third ink at 10 ms is defined as γ3(10) mN/m, Expressions 4 and 5 are satisfied.

$$0 \leq \gamma 3(10) - \gamma 2(T) \leq 3.0 \ldots (4)$$

$$0 \leq \gamma 3(10) - \gamma 2(10) \ldots (5)$$

As shown in Expression 4, in a case where "y3(10) - y2(TX)" (that is, a value obtained by subtracting the dynamic surface tension of the second ink at TX ms from the dynamic surface tension of the third ink at 10 ms) is 0 or greater, the third ink is unlikely to spread after landing, and thus intercolor bleeding is suppressed. Further, in a case where "y3(10) - y2(TX)" is 3.0 or less, movement of the ink due to a difference between the dynamic surface tension of the second ink and the dynamic surface tension of the third ink is suppressed, and thus intercolor bleeding is suppressed.
As shown in Expression 5, in a case where "y2(10) - γ1(10)" (that is, a value obtained by subtracting the dynamic surface tension of the second ink at 10 ms from the dynamic surface tension of the third ink at 10 ms) is 0 or greater, a state where the dynamic surface tension of the third ink is greater than the dynamic surface tension of the second ink is maintained even after a lapse of time from jetting of the second ink and the third ink, and thus intercolor bleeding is suppressed.
Further, the upper limit of "γ3(10) - γ2(10)" is not particularly limited, but is preferably 2.0 in order to satisfy Expression 4. That is, it is preferable to satisfy Expression 5'.

$$0 \leq \gamma 3(10) - \gamma 2(10) \leq 2.0 \ldots (5')$$

<Jet interval TX>

In the ink jet recording method of the present disclosure, the jet interval TX is preferably in a range of 80 ms to 1,000 ms from the viewpoint of the productivity.

<Other steps>

The ink jet recording method of the present disclosure may include a step of heating the recording medium to dry the first ink dots and the second ink dots formed on the recording medium after sequentially performing the first ink jetting step and the second ink jetting step. Further, the inkjet recording method of the present disclosure may include a step of heating the recording medium to dry the first ink dots, the second ink dots, and the third ink dots formed on the recording medium after sequentially performing the first ink jetting step, the second ink jetting step, and the third ink jetting step.

Examples of a heating method include known heating methods of using a heater and the like, known air blowing methods of using a dryer and the like, and methods of combining these.

Specific examples of the method of heating the recording medium include a method of applying heat using a heater or the like from a side opposite to the surface of the recording medium to which the first ink and the second ink have been jetted, a method of applying warm air or hot air to the surface of the recording medium to which the first ink and the second ink have been jetted, a method of applying heat using an infrared heater from a side of the surface of the recording medium to which the first ink and the second ink have been jetted or a side opposite to this surface, and a method of combining a plurality of these methods.

The heating temperature is preferably 55°C or higher, more preferably 60°C or higher, and particularly preferably 65°C or higher. The upper limit of the heating temperature is not particularly limited, and is, for example, 150°C.

The heating time is not particularly limited, but it is preferably in a range of 3 seconds to 60 seconds, more preferably in a range of 5 seconds to 60 seconds, and particularly preferably 10 seconds to 40 seconds.

The inkjet recording method of the present disclosure is performed by using an image recording device including, for example, a transport mechanism that transports a recording medium, a first ink jet head, and a second ink jet head disposed on a downstream side of the first inkjet head in a transport direction of the recording medium. The recording medium is transported by the transport mechanism, the first ink is jetted from the first inkjet head onto the transported recording medium, and the second ink can be jetted from the second inkjet head to the region of the recording medium to which the first ink has been applied.

Examples of the image recording device include known image recording devices described in JP2010-83021A, JP2009-234221A, and JP1998-175315A (JP-H10-175315A).

[Ink set]

An ink set of the present disclosure includes a first ink that contains a colorant, a surfactant, and water, and a second ink that contains a colorant, a surfactant, and water, in which the first ink and the second ink have hues different from each other, and in a case where a dynamic surface tension of the first ink at 10 ms is defined as $\gamma1(10)$ mN/m, a dynamic surface tension of the first ink at 1,000 ms is defined as $\gamma1(10)$ mN/m, and a dynamic surface tension of the second ink at 10 ms is defined as $\gamma2(10)$ mN/m, both $\gamma1(10)$ and $\gamma2(10)$ are 35 or less, and Expressions 6 and 7 are satisfied.

$$0 \leq \gamma2(10) - \gamma1(10) \ldots (6)$$

$$0 \leq \gamma2(10) - \gamma1(1{,}000) \leq 3.0 \ldots (7)$$

According to the ink set of the present disclosure, an image in which intercolor mixing is suppressed can be obtained.

The details of the first ink and the second ink are as described in the section of the ink jet recording method.

It is preferable that the first ink and the second ink are two inks selected from the group consisting of a yellow ink, a magenta ink, a cyan ink, and a black ink.

It is preferable that both the first ink and the second ink contain a silicone-based surfactant as a surfactant.

It is preferable that the silicone-based surfactant has a structure represented by Formula 3.

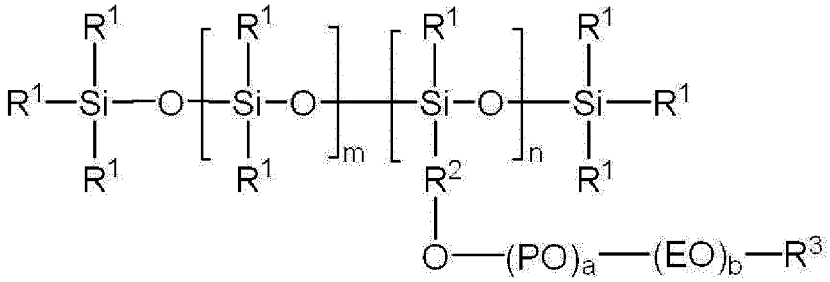

(3)

In Formula 3, $R^1$'s each independently represent an alkyl group having 1 to 3 carbon atoms or a hydroxy group, $R^2$ represents an alkanediyl group having 2 to 5 carbon atoms, $R^3$ represents a hydrogen atom, an alkyl group having 1 to 3 carbon atoms, or a hydroxy group, PO represents a propyleneoxy group, and EO represents an ethyleneoxy group. a, b, m, and n represent an average addition mole number of each unit, where a is in a range of 0 to 10, b is in a range of 1 to 50, m is in a range of 1 to 500, and n is in a range of 1 to 50.

It is more preferable that a is 0, b is in a range of 1 to 15, m is in a range of 1 to 10, and n is in a range of 1 to 5.

The content of the silicone-based surfactant in the first ink is 0.4% by mass or greater with respect to the total amount of the first ink, and the content of the silicone-based surfactant in the second ink is preferably 0.4% by mass or greater with respect to the total amount of the second ink.

Examples

Hereinafter, the present disclosure will be described in more detail based on examples, but the present disclosure is not limited to the following examples unless the gist thereof is overstepped.

The weight-average molecular weight was measured using HLC (registered trademark)-8020GPC (manufactured by Tosoh Corporation) as a measuring device, three columns of TSKgel (registered trademark), Super Multipore, HZ-H (manufactured by Tosoh Corporation, 4.6 mmID × 15 cm), and tetrahydrofuran (THF) as an eluent. Further, the measurement was performed under measurement conditions of a sample concentration of 0.45% by mass, a flow rate of 0.35 ml/min, a sample injection volume of 10 μL, and a measurement temperature of 40°C using an RI detector. Further, the calibration curve was prepared using eight samples of "F-40", "F-20", "F-4", "F-1", "A-5000", "A-2500", "A-1000", and "n-propylbenzene" which are "Standard Samples TSK standard, polystyrene" (manufactured by Tosoh Corporation).

The dynamic surface tension was measured using, for example, a bubble pressure type dynamic surface tension meter (product name, "BP100", manufactured by KRUSS).

In preparation of each ink, each pigment dispersion liquid and a resin particle dispersion liquid were prepared in advance.

<Synthesis of pigment dispersing agent>

A monomer feed composition was prepared by mixing methacrylic acid (172 parts by mass), benzyl methacrylate (828 parts by mass), and isopropanol (375 parts by mass). Further, an initiator feed composition was prepared by mixing 2,2-azobis(2-methylbutyronitrile) (22.05 parts by mass) and isopropanol (187.5 parts by mass). Next, isopropanol (187.5 parts by mass) was heated to 80°C in a nitrogen atmosphere, and a mixture of the monomer feed composition and the initiator feed composition was added dropwise thereto over 2 hours. After completion of the dropwise addition, the obtained solution was further maintained at 80°C for 4 hours and then cooled to 25°C. After cooling of the solution, the solvent was removed under reduced pressure, thereby obtaining a water-soluble polymer (methacrylic acid/benzyl methacrylate copolymer). The water-soluble polymer had a weight-average molecular weight of about 30,000 and an acid value of 112 mgKOH/g.

<Preparation of magenta pigment dispersion liquid>

0.8 equivalents of the amount of methacrylic acid in the obtained water-soluble polymer (150 parts by mass) was neutralized with a potassium hydroxide aqueous solution. Thereafter, ion exchange water was added thereto to adjust the concentration to 25% by mass, thereby obtaining an aqueous solution of a polymer dispersing agent Q-1.

The aqueous solution (124 parts by mass) of the polymer dispersing agent Q-1, a magenta pigment (Pigment Red 122, Chromofine Red, manufactured by Dainichiseika Color & Chemicals Mfg. Co., Ltd.) (48 parts by mass), water (75 parts by mass), and dipropylene glycol (30 parts by mass) were mixed and dispersed using a beads mill (bead

diameter: 0.1 mmcp, zirconia beads) until a desired volume average particle diameter was obtained, thereby obtaining a dispersion liquid (uncrosslinked dispersion liquid) in which the magenta pigment was dispersed by the polymer dispersing agent Q-1. The pigment concentration of the magenta pigment was 15% by mass.

Trimethylolpropane polyglycidyl ether (product name, "Denacol EX-321", manufactured by Nagase ChemteX Corporation) (1.3 parts by mass) as a crosslinking agent and a boric acid aqueous solution (boric acid concentration: 4% by mass) (14.3 parts by mass) were added to this uncrosslinked dispersion liquid (136 parts by mass), and the solution was allowed to react at 50°C for 6 and a half hours and cooled to 25°C, whereby the polymer dispersing agent Q-1 was crosslinked by the crosslinking agent. In this manner, a dispersion liquid (crosslinked dispersion liquid) in which the magenta pigment was dispersed by a crosslinked resin 1 was obtained. Further, the crosslinked resin 1 is a crosslinked substance of the resin dispersing agent Q-1. Next, ion exchange water was added to the obtained crosslinked dispersion liquid, and ultrafiltration was performed using a stirring type ULTRAHOLDER (manufactured by Advantec AS) and an ultrafiltration filter (manufactured by Advantec AS, fractional molecular weight of 50,000, Q0500076E ULTRAFILTER). A magenta pigment dispersion liquid (magenta pigment concentration of 15% by mass) in which the cyan pigment was dispersed by the crosslinked resin 1 was obtained by performing purification such that the concentration of dipropylene glycol in the crosslinked dispersion liquid reached 0.1% by mass or less and performing concentration until the pigment concentration reached 15% by mass.

Preparation of cyan pigment dispersion liquid

A cyan pigment dispersion liquid was obtained by the same method as in the preparation of the magenta pigment dispersion liquid except that Pigment Blue 15:3 (Phthalocyanine Blue-A220, manufactured by Dainichiseika Color & Chemicals Mfg. Co., Ltd.) serving as a cyan pigment was used in place of the magenta pigment.

<Preparation of yellow pigment dispersion liquid>

A yellow pigment dispersion liquid was obtained by the same method as in the preparation of the magenta pigment dispersion liquid except that Pigment Yellow 74 (Chromofine Yellow, manufactured by Dainichiseika Color & Chemicals Mfg. Co., Ltd.) serving as a yellow pigment was used in place of the magenta pigment.

<Preparation of black pigment dispersion liquid>

A black pigment dispersion liquid was obtained by the same method as in the preparation of the magenta pigment dispersion liquid except that carbon black (product name, "MA-100", manufactured by Mitsubishi Chemical Corporation) serving as a black pigment was used in place of the magenta pigment.

<Preparation of aqueous dispersion liquid of resin particles>

A three-neck flask equipped with a stirrer, a thermometer, a reflux condenser, and a nitrogen gas introduction pipe was charged with water (250 g), 12-methacrylamidododecanoic acid (6.7 g), potassium hydrogen carbonate (0.17 g), and isopropanol (20 g) and was heated to 85°C under a nitrogen stream. Here, a mixed solution consisting of 4,4'-azobis(4-cyanovaleric acid) (radical polymerization initiator, product name, "V-501", manufactured by FUJIFILM Wako Pure Chemical Corporation) (0.11 g), potassium hydrogen carbonate (0.08 g), and water (9 g) was added thereto, and the mixture was stirred for 10 minutes. Next, a monomer solution consisting of styrene (14 g), benzyl methacrylate (14 g), methyl methacrylate (48 g), butyl methacrylate (3.3 g), and hydroxyethyl methacrylate (14 g) was added dropwise to the three-neck flask at a constant speed until the dropwise addition was completed in 3 hours. Further, a mixed solution consisting of V-501 (0.06 g), potassium hydrogen carbonate (0.04 g), and water (6 g) was added to the solution twice, immediately after the start of dropwise addition of the monomer solution and 1.5 hours after the start of dropwise addition of the monomer solution. After completion of the dropwise addition of the monomer solution, the mixed solution was stirred for 1 hour. Subsequently, a mixed solution consisting of V-501 (0.06 g), potassium hydrogen carbonate (0.04 g), and water (6 g) was added to the obtained reaction mixture, and the mixture was further stirred for 3 hours. The obtained reaction mixture was filtered through a mesh having a mesh size of 50 μm, thereby obtaining an aqueous dispersion liquid of resin particles A.

<Preparation of cyan ink, magenta ink, yellow ink, and black ink>

The components listed in Tables 1 and 2 were mixed such that the contents (% by mass) of the components were as listed in Tables 1 and 2. Coarse particles were removed from the mixed solution using a 1 μm filter to prepare an ink.

Further, a cyan ink C13 and a magenta ink M13 were prepared by the production method described in Example 2 of JP2017-8319A.

The details of the components listed in Tables 1 and 2 are as follows.

(Pigment dispersion liquid)

· Each pigment dispersion liquid prepared above (concentration of solid contents: 15% by mass)

(Organic solvent)

· PG: propylene glycol (manufactured by ADEKA Corporation)
· EGmHE: ethylene glycol monohexyl ether (trade name, "hexyl diglycol", manufactured by NIPPON NYUKAZAI CO., LTD.)

(Resin particles)

· Dispersion liquid of resin particles A prepared above (concentration of solid contents: 25% by mass)

(Silicone-based surfactant)

· BYK-345: silicone-based surfactant having structure represented by Formula 3, in which a is 0, b is 5.9, m is 1.8, and n is 1 in Formula 3 (manufactured by BYK-Chemie GmbH)
· BYK-347: silicone-based surfactant having structure represented by Formula 3, in which a is 0, b is 5.8, m is 2, and n is 1 in Formula 3 (manufactured by BYK-Chemie GmbH)
· BYK-349: silicone-based surfactant having structure represented by Formula 3, in which a is 0, b is 8.6, m is 2.9, and n is 1 in Formula 3 (manufactured by BYK-Chemie GmbH)

(Other components)

· SURFYNOL 465: ethylene oxide adduct of 2,4,7,9-tetramethyl-5-decyne-4,7-diol, average addition mole number of ethylene oxide: 10.0, acetylene glycol-based surfactant, manufactured by Nissin Chemical Co., Ltd.)
·HI-TECH E-6314: aqueous dispersion liquid of polyethylene wax (concentration of solid contents: 35% by mass, manufactured by TOHO Chemical Industry Co., Ltd.)
·HI-TECH E-9015: aqueous dispersion liquid of polyethylene wax (concentration of solid contents: 35% by mass, manufactured by Toho Chemical Industry Co., Ltd.)
· Urea (manufactured by Nissan Chemical Corporation)
· PVP K15: polyvinylpyrrolidone (manufactured by Tokyo Chemical Industry Co., Ltd.)
· SNOWTEX XS: colloidal silica (manufactured by Nissan Chemical Corporation, concentration of solid contents: 20% by mass)

[Table 1]

| | | C1 | C2 | C3 | C4 | C5 | C6 | C7 | C8 | C11 | C12 |
|---|---|---|---|---|---|---|---|---|---|---|---|
| Pigment dispersion liquid | Cyan pigment dispersion liquid (concentration of solid contents: 15%) | 20.0 | 20.0 | 20.0 | 20.0 | 20.0 | 20.0 | 20.0 | 20.0 | 20.0 | 20.0 |
| Water | | 29.7 | 29.7 | 29.7 | 29.9 | 29.3 | 29.2 | 33.3 | 29.6 | 30.4 | 30.1 |
| Organic solvent | PG | 25.5 | 25.5 | 25.5 | 25.5 | 25.5 | 25.5 | 25.5 | 25.5 | 25.5 | 25.5 |
| | EGmHE | 3.4 | 3.4 | 3.4 | 3.4 | 3.4 | 3.4 | - | 3.4 | 3.4 | 3.4 |
| Resin particles | Resin particle dispersion liquid (concentration of solid contents: 25%) | 12.0 | 12.0 | 12.0 | 12.0 | 12.0 | 12.0 | 12.0 | 12.0 | 12.0 | 12.0 |
| Silicone-based surfactant | BYK-345 | 0.7 | - | - | 0.5 | 1.1 | - | 0.5 | - | - | 0.3 |
| | BYK-347 | - | 0.7 | - | - | - | 1.2 | - | - | - | - |
| | BYK-349 | - | - | 0.7 | - | - | - | - | - | - | - |
| Other components | SURFYNOL 465 | - | - | - | - | - | - | - | 0.8 | - | - |
| | HI-TECH-6314 (concentration of solid contents: 35%) | 5.1 | 5.1 | 5.1 | 5.1 | 5.1 | 5.1 | 5.1 | 5.1 | 5.1 | 5.1 |
| | Urea | 3.0 | 3.0 | 3.0 | 3.0 | 3.0 | 3.0 | 3.0 | 3.0 | 3.0 | 3.0 |
| | PVP K-15 | 0.1 | 0.1 | 0.1 | 0.1 | 0.1 | 0.1 | 0.1 | 0.1 | 0.1 | 0.1 |
| | SNOWTEX XS (concentration of solid contents: 20%) | 0.5 | 0.5 | 0.5 | 0.5 | 0.5 | 0.5 | 0.5 | 0.5 | 0.5 | 0.5 |
| Dynamic surface tension (mN/m) | 10 ms | 30.7 | 31.9 | 29.8 | 31.4 | 30.3 | 30.7 | 35.8 | 34.5 | 37.7 | 33.5 |
| | 100 ms | 29.0 | 30.2 | 28.1 | 29.3 | 28.8 | 30.0 | 34.2 | 32.1 | 31.1 | 30.0 |
| | 250 ms | 28.5 | 29.8 | 27.6 | 28.8 | 28.2 | 29.5 | 33.6 | 31.6 | 30.5 | 29.7 |
| | 1000 ms | 28.2 | 29.4 | 27.3 | 28.4 | 27.9 | 29.2 | 33.4 | 31.2 | 29.9 | 29.3 |

[Table 2]

| | | M1 | M2 | M3 | M4 | M5 | M6 | M7 | M8 | M11 | M12 | Y1 | K1 |
|---|---|---|---|---|---|---|---|---|---|---|---|---|---|
| Pigment dispersion liquid | Cyan pigment dispersion liquid (concentration of solid contents: 15%) | - | - | - | - | - | - | - | - | - | - | - | - |
| | Magenta pigment dispersion liquid (concentration of solid contents: 15%) | 33.3 | 33.3 | 33.3 | 33.3 | 33.3 | 33.3 | 33.3 | 33.3 | 33.3 | 33.3 | - | - |
| | Yellow pigment dispersion liquid (concentration of solid contents: 15%) | - | - | - | - | - | - | - | - | - | - | 26.7 | - |
| | Black pigment dispersion liquid (concentration of solid contents: 15%) | - | - | - | - | - | - | - | - | - | - | - | 43.3 |
| Water | | 21.9 | 21.9 | 21.9 | 22.1 | 21.6 | 22.1 | 25.5 | 21.7 | 22.5 | 21.2 | 26.7 | 12.8 |
| Organic solvent | PG | 20.0 | 20.0 | 20.0 | 20.0 | 20.0 | 20.0 | 20.0 | 20.0 | 20.0 | 21.0 | 22.0 | 22.0 |
| | EGmHE | 3.4 | 3.4 | 3.4 | 3.4 | 3.4 | 3.4 | - | 3.4 | 3.4 | 3.4 | 3.4 | 3.4 |
| Resin particles | Resin particle dispersion liquid (concentration of solid contents: 25%) | 12.0 | 12.0 | 12.0 | 12.0 | 12.0 | 12.0 | 12.0 | 12.0 | 12.0 | 12.0 | 12.0 | 12.0 |
| Silicone-based surfactant | BYK-345 | 0.6 | - | - | 0.4 | 0.9 | - | 0.4 | - | - | 0.3 | 0.5 | 0.9 |
| | BYK-347 | - | 0.6 | - | - | - | 0.4 | - | - | - | - | - | - |
| | BYK-349 | - | - | 0.6 | - | - | - | - | - | - | - | - | - |
| Other components | SURFYNOL 465 | - | - | - | - | - | - | - | 0.8 | - | - | - | |
| | HI-TECH-6314 (concentration of solid contents: 35%) | 5.1 | 5.1 | 5.1 | 5.1 | 5.1 | 5.1 | 5.1 | 5.1 | 5.1 | 5.1 | 5.1 | - |
| | HI-TECH-9015 (concentration of solid contents: 35%) | - | - | - | - | - | - | - | - | - | - | - | 2.0 |
| | Urea | 3.0 | 3.0 | 3.0 | 3.0 | 3.0 | 3.0 | 3.0 | 3.0 | 3.0 | 3.0 | 3.0 | 3.0 |
| | PVP K-15 | 0.1 | 0.1 | 0.1 | 0.1 | 0.1 | 0.1 | 0.1 | 0.1 | 0.1 | 0.1 | 0.1 | 0.1 |
| | SNOWTEX XS (concentration of solid contents: 20%) | 0.5 | 0.5 | 0.5 | 0.5 | 0.5 | 0.5 | 0.5 | 0.5 | 0.5 | 0.5 | 0.5 | 0.5 |

(continued)

| | | M1 | M2 | M3 | M4 | M5 | M6 | M7 | M8 | M11 | M12 | Y1 | K1 |
|---|---|---|---|---|---|---|---|---|---|---|---|---|---|
| Dynamic surface tension (mN/m) | 10 ms | 31.0 | 31.9 | 30.0 | 31.7 | 30.5 | 32.9 | 36.1 | 34.9 | 39.1 | 33.7 | 31.3 | 30.4 |
| | 100 ms | 29.3 | 30.3 | 28.2 | 29.6 | 29.2 | 31.1 | 34.4 | 32.4 | 32.3 | 30.4 | 29.6 | 28.8 |
| | 250 ms | 28.7 | 30.0 | 27.8 | 29.0 | 28.6 | 30.9 | 33.8 | 31.9 | 31.8 | 30.0 | 29.0 | 28.2 |
| | 1000 ms | 28.4 | 29.8 | 27.5 | 28.7 | 28.2 | 30.6 | 33.5 | 31.5 | 31.2 | 29.6 | 28.7 | 28.0 |

[Examples 1 to 18 and Comparative Examples 1 to 6]

Image recording was performed using the first ink and the second ink listed in Table 3.

<Image recording 1>

An image recording device including a transport mechanism for transporting a recording medium, a first ink jet head fixedly disposed, and a second ink jet head fixedly disposed on a downstream side of the first ink jet head was prepared. The first ink jet head was used to jet the first ink, and the second inkjet head was used to jet the second ink.

A recording medium (product name, "OK TOPCOAT", manufactured by OJI PAPER CO., LTD.) was fixed on a stage in an environment of a temperature of 25 ± 1°C and a relative humidity of 30 ± 5%, and an ink jet head (product name, "GELJET GX5000 Printer Head", manufactured by RICOH COMPANY, LTD.) was filled with the first ink and the second ink listed in Table 3.

Both the first ink jet head and the second ink jet head were disposed such that the alignment direction of nozzles was inclined by 75.7° with respect to a direction orthogonal to the transport direction of the recording medium.

The interval between the first ink jet head and the second ink jet head was set to 122 mm. The transportation speed of the recording medium was set to 73.2 m/min (jet interval between first ink and second ink: 100 ms), 29.3 m/min (jet interval between first ink and second ink: 250 ms), and 7.3 m/min (jet interval between first ink and second ink: 1,000 ms).

The first ink was jetted from the first inkjet head to record a line pattern image having a width of 500 μm with a duty of 100%. Next, the second ink was jetted from the second ink jet head at the jet interval listed in Table 3, and a solid image with a duty of 100% was recorded such that the solid image overlapped with the line pattern image. The recording medium was mounted on a hot plate at 70°C in a state of the image recorded surface facing upward immediately after the solid image was recorded, and the recording medium was immediately dried with warm air at 120°C for 10 seconds using a dryer, thereby preparing an image recorded material 1.

The image recorded material 1 was obtained by recording a solid image with the second ink on the line pattern image formed with the first ink.

<Image recording 2>

The image recording device was set in the same manner as in the image recording 1.

The first ink was jetted from the first ink jet head to record a solid image with a duty of 100%. Next, the second ink was jetted from the second ink jet head at the jet interval listed in Table 3, and a line pattern image with a duty of 100% and a width of 500 μm was recorded such that the line pattern image overlapped with the solid image. An image recorded material 2 was prepared by the same method as in the image recording 1 except for the procedures described above.

The image recorded material 2 was obtained by recording a line pattern image with the second ink on the solid image formed with the first ink.

The intercolor mixing and the image quality were evaluated by using the image recorded material 1 and the image recorded material 2. The evaluation methods are as follows. The evaluation results are listed in Table 3.

<Intercolor mixing of image recorded material 1 (line pattern of first ink)>

In the image recorded material 1, the line pattern image (overlapping portion) in which the first ink and the second ink overlapped each other was observed with an optical microscope. The widths of the overlapping portion were measured at 10 sites, and the average value was calculated. The intercolor mixing (line pattern of the first ink) was evaluated based on the widths of the overlapping portion. The evaluation standards are as follows. The ranks A, B, and C are at levels that are not problematic in practical use.

A: The width thereof was less than 700 μm.
B: The width thereof was 700 μm or greater and less than 800 μm.
C: The width thereof was 800 μm or greater and less than 900 μm.
D: The width thereof was 900 μm or greater and less than 1,000 μm.
E: The width thereof was 1,000 μm or greater.

<Intercolor mixing of image recorded material 2 (line pattern of second ink)>

In the image recorded material 2, the line pattern image (overlapping portion) in which the first ink and the

second ink overlapped each other was observed with an optical microscope. The widths of the overlapping portion were measured at 10 sites, and the average value was calculated. The intercolor mixing (line pattern of the second ink) was evaluated based on the widths of the overlapping portion. The evaluation standards were the same as those for the intercolor mixing (line pattern of the first ink) of the image recorded material 1.

<Image quality (first ink)>

In the image recorded material 2, the solid image portion of the first ink was visually observed. Specifically, the image quality (first ink) was evaluated based on the presence or absence of color unevenness and white streaks.

A: Color unevenness and white streaks were not found.
B: Color unevenness was found, but white streaks were not found.
C: Color unevenness was found and a small number of white streaks were found.
D: Color unevenness was found and multiple white streaks were found.

<Image quality (second ink)>

In the image recorded material 1, the solid image portion of the second ink was visually observed. Specifically, the image quality (second ink) was evaluated based on the presence or absence of color unevenness and white streaks. The evaluation standards were the same as those for the image quality (first ink).

In Table 3, $\gamma1(10)$ denotes the dynamic surface tension of the first ink at 10 ms. $\gamma1(T)$ denotes the dynamic surface tension of the first ink at T ms. $\gamma2(10)$ denotes the dynamic surface tension of the second ink at 10 ms. "y2(10) - $\gamma1(T)$" denotes a value obtained by subtracting $\gamma1(T)$ from $\gamma(10)$. "$\gamma2(10) - \gamma1(10)$" denotes a value obtained by subtracting $\gamma1(10)$ from $\gamma2(10)$. T denotes the jet interval in units of ms. All the dynamic surface tensions are in units of mN/m.

[Table 3]

| | Jet interval T | First ink | | | Second ink | | γ2(10) - γ1(T) | γ2(10) - γ1 (10) | Evaluation | | | |
|---|---|---|---|---|---|---|---|---|---|---|---|---|
| | | | | | | | | | Intercolor mixing | | Image quality | |
| | | Type | γ1(10) | γ1(T) | Type | γ2(10) | | | Line pattern of first ink | Line pattern of second ink | First ink | Second ink |
| Example 1 | 100 | C1 | 30.7 | 29.0 | M1 | 31.0 | 2.0 | 0.3 | A | A | A | A |
| Example 2 | 250 | C1 | 30.7 | 28.5 | M1 | 31.0 | 2.5 | 0.3 | A | A | A | A |
| Example 3 | 1000 | C1 | 30.7 | 28.2 | M1 | 31.0 | 2.8 | 0.3 | A | A | A | A |
| Example 4 | 100 | C2 | 31.9 | 30.2 | M2 | 31.9 | 1.7 | 0 | A | B | A | A |
| Example 5 | 250 | C2 | 31.9 | 29.8 | M2 | 31.9 | 2.1 | 0 | A | B | A | A |
| Example 6 | 1000 | C2 | 31.9 | 29.4 | M2 | 31.9 | 2.5 | 0 | A | B | A | A |
| Example 7 | 100 | C3 | 29.8 | 28.1 | M3 | 30.0 | 1.9 | 0.2 | A | A | A | A |
| Example 8 | 250 | C3 | 29.8 | 27.6 | M3 | 30.0 | 2.4 | 0.2 | A | A | A | A |
| Example 9 | 1000 | C3 | 29.8 | 27.3 | M3 | 30.0 | 2.7 | 0.2 | A | A | A | A |
| Example 10 | 100 | C4 | 31.4 | 30.1 | M4 | 31.7 | 1.6 | 0.3 | A | A | A | A |
| Example 11 | 100 | C5 | 30.3 | 28.8 | M5 | 30.5 | 1.7 | 0.2 | A | A | A | A |
| Example 12 | 100 | C2 | 31.9 | 30.2 | M6 | 32.9 | 2.7 | 1.0 | A | A | A | A |
| Example 13 | 100 | C4 | 31.4 | 30.1 | M6 | 32.9 | 2.8 | 1.5 | A | A | A | A |
| Example 14 | 100 | C6 | 30.7 | 30.0 | M6 | 32.9 | 2.9 | 2.2 | B | A | A | A |
| Example 15 | 100 | C7 | 37.2 | 35.5 | M7 | 37.5 | 2.0 | 0.3 | A | A | B | B |
| Example 16 | 100 | M1 | 31.0 | 29.3 | Y1 | 31.3 | 2.0 | 0.3 | A | A | A | A |
| Example 17 | 100 | K1 | 30.4 | 28.8 | C1 | 30.7 | 1.9 | 0.3 | A | A | A | A |
| Example 18 | 100 | C8 | 34.5 | 32.1 | M8 | 34.9 | 3.0 | 0.4 | B | A | A | A |
| Comparative Example 1 | 100 | C11 | 37.7 | 31.1 | M11 | 39.1 | 8.0 | 1.4 | E | A | B | B |
| Comparative Example 2 | 100 | C12 | 33.5 | 30.0 | M12 | 33.7 | 3.7 | 0.2 | D | A | A | A |

(continued)

| | Jet interval T | First ink | | | Second ink | | $\gamma2(10) - \gamma1(T)$ | $\gamma2(10) - \gamma1(10)$ | Evaluation | | | |
|---|---|---|---|---|---|---|---|---|---|---|---|---|
| | | | | | | | | | Intercolor mixing | | Image quality | |
| | | Type | $\gamma1(10)$ | $\gamma1(T)$ | Type | $\gamma2(10)$ | | | Line pattern of first ink | Line pattern of second ink | First ink | Second ink |
| Comparative Example 3 | 100 | C13 | 34.8 | 30.8 | M13 | 34.8 | 4.0 | 0 | D | B | A | A |
| Comparative Example 4 | 250 | C13 | 34.8 | 29.8 | M13 | 34.8 | 5.0 | 0 | D | B | A | A |
| Comparative Example 5 | 1000 | C13 | 34.8 | 29.2 | M13 | 34.8 | 5.6 | 0 | D | B | A | A |
| Comparative Example 6 | 100 | C1 | 30.7 | 29.0 | M3 | 30.0 | 1.0 | -0.7 | A | D | A | A |

As listed in Table 3, it was found that in Examples 1 to 18, since the methods included the first ink jetting step and the second ink jetting step, and Expressions 1 and 2 were satisfied, intercolor mixing was suppressed.

On the contrary, it was found that in Comparative Examples 1 to 5, since "y2(10) - γ1(T)" was greater than 3.0, bleeding occurred significantly in the evaluation of intercolor mixing (line pattern of the first ink).

It was found that in Comparative Example 6, since "y2(10) - γ1(10)" was less than 0, bleeding occurred significantly in the evaluation of intercolor mixing (line pattern of the second ink).

It was found that in Example 13, since "y2(10) - γ1(10)" was 2.0 or less, intercolor mixing (line pattern of the first ink) was suppressed as compared with Example 14.

It was found that in Example 1, since both γ1(10) and γ2(10) were 35 or less, the image quality was excellent as compared with Example 15.

It was found that in Example 1, since both the first ink and the second ink contained a silicone-based surfactant, intercolor mixing (line pattern of the first ink) was suppressed as compared with Example 18.

[Example 101]

Image recording was performed using the first ink, the second ink, and the third ink listed in Table 4.

<Image recording 3>

An image recording device including a transport mechanism for transporting a recording medium, a first inkjet head fixedly disposed, a second inkjet head fixedly disposed on a downstream side of the first ink jet head, and a third ink jet head fixedly disposed on a downstream side of the second ink jet head was prepared. The first ink jet head was used to jet the first ink, the second inkjet head was used to jet the second ink, and the third inkjet head was used to jet the third ink.

A recording medium (product name, "OK TOPCOAT", manufactured by OJI PAPER CO., LTD.) was fixed on a stage in an environment of a temperature of 25 ± 1°C and a relative humidity of 30 ± 5%, and an ink jet head (product name, "GELJET GX5000 Printer Head", manufactured by RICOH COMPANY, LTD.) was filled with the first ink, the second ink, and the third ink listed in Table 4.

Both the first ink jet head and the second ink jet head were disposed such that the alignment direction of nozzles was inclined by 75.7° with respect to a direction orthogonal to the transport direction of the recording medium.

The interval between the first ink jet head and the second ink jet head and the interval between the second ink jet head and the third ink jet head were set to 122 mm. The transportation speed of the recording medium was set to 73.2 m/min.

The first ink was jetted from the first ink jet head to record a solid image with a duty of 100%. Next, the second ink was jetted from the second ink jet head at the jet interval (T: 100 ms) listed in Table 4 to record a line pattern image with a duty of 100% and a width of 500 μm such that the line pattern image overlapped with the solid image.

Next, the third ink was jetted from the third ink jet head at the jet interval (TX: 100 ms) listed in Table 4 to record a solid image with a duty of 100% such that the solid image overlapped with the overlapping region between the above-described solid image and the above-described line pattern image. The recording medium was mounted on a hot plate at 70°C in a state of the image recorded surface facing upward immediately after the solid image was recorded, and the recording medium was immediately dried with warm air at 120°C for 10 seconds using a dryer, thereby preparing an image recorded material 3.

The image recorded material 3 was obtained by recording a solid image with the first ink, a line pattern image with the second ink, and a solid image with the third ink in this order in an overlapping manner.

<Image recording 4>

The image recording device was set in the same manner as in the image recording 3 described above.

The first ink was jetted from the first inkjet head to record a line pattern image having a width of 500 μm with a duty of 100%. Next, the second ink was jetted from the second ink jet head at the jet interval (T: 100 ms) listed in Table 4 to record a solid image with a duty of 100% such that the solid image overlapped with the line pattern image. Next, the third ink was jetted from the third inkjet head at the jet interval (TX: 100 ms) listed in Table 4 to record a line pattern image with a duty of 100% and a width of 500 μm such that the line pattern image overlapped with the overlapping region between the above-described line pattern image and the above-described solid image. An image recorded material 4 was prepared by the same method as in the image recording 3 except for the procedures described above.

The image recorded material 4 was obtained by recording a line pattern image with the first ink, a solid image with the second ink, and a line pattern image with the third ink in this order in an overlapping manner.

The intercolor mixing and the image quality were evaluated by using the image recorded material 3 and the

image recorded material 4. The evaluation methods are as follows. The evaluation results are listed in Table 4.

<Intercolor mixing of image recorded material 3 (line pattern of second ink)>

In the image recorded material 3, the line pattern image (overlapping portion) in which the second ink and the third ink overlapped each other was observed with an optical microscope. The widths of the overlapping portion were measured at 10 sites, and the average value was calculated. The intercolor mixing (line pattern of the second ink) was evaluated based on the widths of the overlapping portion. The evaluation standards were the same as those for the intercolor mixing (line pattern of the first ink) of the image recorded material 1.

<Intercolor mixing of image recorded material 4 (line pattern of third ink)>

In the image recorded material 4, the line pattern image (overlapping portion) in which the second ink and the third ink overlapped each other was observed with an optical microscope. The widths of the overlapping portion were measured at 10 sites, and the average value was calculated. The intercolor mixing (line pattern of the third ink) was evaluated based on the widths of the overlapping portion. The evaluation standards were the same as those for the intercolor mixing (line pattern of the first ink) of the image recorded material 1.

<Image quality (third ink)>

In the image recorded material 3, the solid image portion of the third ink was visually observed. Specifically, the image quality (third ink) was evaluated based on the presence or absence of color unevenness and white streaks. The evaluation standards were the same as those for the image quality (first ink).

In Table 4, γ2(TX) denotes the dynamic surface tension of the second ink at TX ms. γ3(10) denotes the dynamic surface tension of the third ink at 10 ms. "y3(10) - y2(TX)" denotes a value obtained by subtracting y2(TX) from γ3(10). "y3(10) - y2(10)" denotes a value obtained by subtracting γ2(10) from γ3(10). T and TX denote the jet interval in units of ms. All the dynamic surface tensions are in units of mN/m.

[Table 4]

| | Jet interval T | Jet interval TX | First ink | | | Second ink | | | Third ink | | γ3 (10) - γ2 (TX) | γ3 (10) - γ2 (10) | Intercolor mixing | | Image quality |
|---|---|---|---|---|---|---|---|---|---|---|---|---|---|---|---|
| | | | Typ e | γ1 (10) | γ1(T) | Type | γ2 (10) | γ2 (TX ) | Type | γ3 (10) | | | Line pattern of second ink | Line pattern of third ink | Third ink |
| Example 101 | 100 | 100 | C1 | 30.7 | 29.0 | M1 | 31.0 | 29.3 | Y1 | 31.3 | 2.0 | 0.3 | A | A | A |

It was found that in Example 101, since the method included the first ink jetting step, the second ink jetting step, and the third ink jetting step, and Expressions 1 and 2 and Expressions 4 and 5 were satisfied, intercolor mixing between the first ink and the second ink and intercolor mixing between the second ink and the third ink were suppressed.

The present disclosure of JP2021-182709 filed on November 9, 2021 is incorporated herein by reference in its entirety. Further, all documents, patent applications, and technical standards described in the present specification are incorporated herein by reference to the same extent as in a case of being specifically and individually noted that individual documents, patent applications, and technical standards are incorporated by reference.

## Claims

**1.** An inkjet recording method, comprising:

a step of jetting a first ink from a first ink jet head to a recording medium; and
a step of jetting a second ink, having a hue that is different from a hue of the first ink, from a second ink jet head to a region of the recording medium onto which the first ink has been applied,
wherein, in a case in which a time taken from jetting the first ink from the first inkjet head to jetting the second ink from the second inkjet head is defined as T ms,
a dynamic surface tension of the first ink at T ms is defined as $\gamma 1(T)$ mN/m,
a dynamic surface tension of the first ink at 10 ms is defined as $\gamma 1(10)$ mN/m, and
a dynamic surface tension of the second ink at 10 ms is defined as $\gamma 2(10)$ mN/m,
the following Expressions 1 and 2 are satisfied:

$$0 \leq \gamma 2(10) - \gamma 1(T) \leq 3.0 \ldots (1)$$

$$0 \leq \gamma 2(10) - \gamma 1(10) \ldots (2).$$

**2.** The ink jet recording method according to claim 1,
wherein the first ink and the second ink are two inks selected from the group consisting of a yellow ink, a magenta ink, a cyan ink, and a black ink.

**3.** The ink jet recording method according to claim 1 or 2,
wherein T is in a range of from 80 to 1,000.

**4.** The inkjet recording method according to any one of claims 1 to 3,
wherein a value obtained by subtracting $\gamma 1(10)$ from $\gamma 2(10)$ is 2.0 or less.

**5.** The inkjet recording method according to any one of claims 1 to 4,
wherein both $\gamma 1(10)$ and $\gamma 2(10)$ are 35 or less.

**6.** The inkjet recording method according to any one of claims 1 to 5,
wherein both the first ink and the second ink contain a silicone-based surfactant.

**7.** The ink jet recording method according to claim 6,

wherein a content of the silicone-based surfactant in the first ink is 0.4% by mass or greater with respect to a total amount of the first ink, and
a content of the silicone-based surfactant in the second ink is 0.4% by mass or greater with respect to a total amount of the second ink.

**8.** The ink jet recording method according to claim 6 or 7,

wherein the silicone-based surfactant has a structure represented by the following Formula 3,

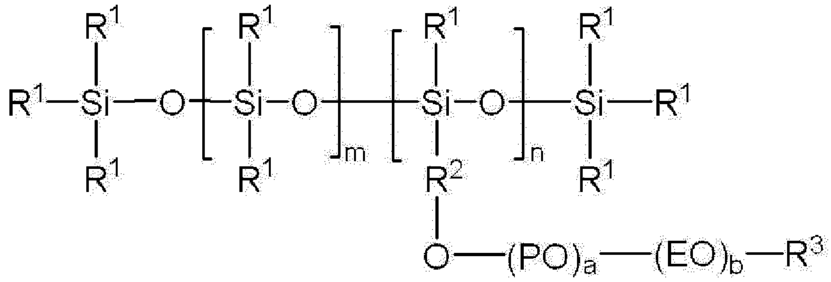

(3)

wherein, in Formula 3, each $R^1$ independently represents an alkyl group having 1 to 3 carbon atoms or a hydroxy group, $R^2$ represents an alkanediyl group having 2 to 5 carbon atoms, $R^3$ represents a hydrogen atom, an alkyl group having 1 to 3 carbon atoms, or a hydroxy group, PO represents a propyleneoxy group, EO represents an ethyleneoxy group, and a, b, m, and n represent an average addition mole number of each unit, a being in a range of from 0 to 10, b being in a range of from 1 to 50, m being in a range of from 1 to 500, and n being in a range of from 1 to 50.

**9.** The ink jet recording method according to claim 8,
wherein, in Formula 3, a is 0, b is in a range of from 1 to 15, m is in a range of from 1 to 10, and n is in a range of from 1 to 5.

**10.** The ink jet recording method according to any one of claims 1 to 9, further comprising:

a step of jetting a third ink, having a hue that is different from the hue of the first ink and the hue of the second ink, from a third ink jet head to a region of the recording medium onto which the first ink and the second ink have been applied in an overlapping manner,
wherein, in a case in which a time taken from jetting the second ink from the second inkjet head to jetting the third ink from the third inkjet head is defined as TX ms,
a dynamic surface tension of the second ink at TX ms is defined as y2(TX) mN/m,
the dynamic surface tension of the second ink at 10 ms is defined as $\gamma2(10)$ mN/m, and
a dynamic surface tension of the third ink at 10 ms is defined as $\gamma3(10)$ mN/m,
the following Expressions 4 and 5 are satisfied:

$$0 \leq \gamma3(10) - \gamma2(T) \leq 3.0 \ldots (4)$$

$$0 \leq \gamma3(10) - \gamma2(10) \ldots (5).$$

**11.** An ink set, comprising:

a first ink that contains a colorant, a surfactant, and water; and
a second ink that contains a colorant, a surfactant, and water,
wherein the first ink and the second ink have hues different from each other, and
in a case in which a dynamic surface tension of the first ink at 10 ms is defined as $\gamma1(10)$ mN/m, and
a dynamic surface tension of the first ink at 1,000 ms is defined as $\gamma1(10)$ mN/m, and
a dynamic surface tension of the second ink at 10 ms is defined as $\gamma2(10)$ mN/m,
both $\gamma1(10)$ and $\gamma2(10)$ are 35 or less, and
the following Expressions 6 and 7 are satisfied:

$$0 \leq \gamma2(10) - \gamma1(10) \ldots (6)$$

$$0 \leq \gamma2(10) - \gamma1(1{,}000) \leq 3.0 \ldots (7).$$

**12.** The ink set according to claim 11,
wherein the first ink and the second ink are two inks selected from the group consisting of a yellow ink, a magenta

ink, a cyan ink, and a black ink.

**13.** The ink set according to claim 11 or 12,
wherein both the first ink and the second ink contain a silicone-based surfactant as the surfactant.

**14.** The ink set according to claim 13,

wherein a content of the silicone-based surfactant in the first ink is 0.4% by mass or greater with respect to a total amount of the first ink, and
a content of the silicone-based surfactant in the second ink is 0.4% by mass or greater with respect to a total amount of the second ink.

**15.** The ink jet recording method according to claim 13 or 14,

wherein the silicone-based surfactant has a structure represented by the following Formula 3,

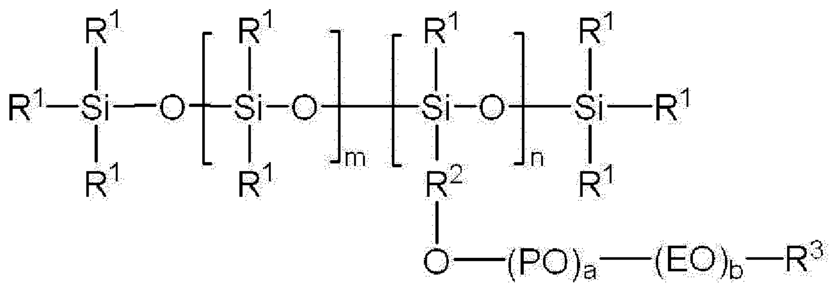

(3)

wherein, in Formula 3, each R each independently represents an alkyl group having 1 to 3 carbon atoms or a hydroxy group, $R^2$ represents an alkanediyl group having 2 to 5 carbon atoms, $R^3$ represents a hydrogen atom, an alkyl group having 1 to 3 carbon atoms, or a hydroxy group, PO represents a propyleneoxy group, EO represents an ethyleneoxy group, and a, b, m, and n represent an average addition mole number of each unit, a being in a range of from 0 to 10, b being in a range of from 1 to 50, m being in a range of from 1 to 500, and n being in a range of from 1 to 50.

**16.** The ink set according to claim 15,
wherein, in Formula 3, a is 0, b is in a range of from 1 to 15, m is in a range of from 1 to 10, and n is in a range of from 1 to 5.

**INTERNATIONAL SEARCH REPORT**

International application No.
**PCT/JP2022/037729**

**A. CLASSIFICATION OF SUBJECT MATTER**

***B41M 5/00***(2006.01)i; ***B41J 2/01***(2006.01)i; ***C09D 11/38***(2014.01)i; ***C09D 11/40***(2014.01)i
FI: B41M5/00 120; C09D11/40; C09D11/38; B41J2/01 401

According to International Patent Classification (IPC) or to both national classification and IPC

**B. FIELDS SEARCHED**

Minimum documentation searched (classification system followed by classification symbols)

B41M5/00; B41J2/01; C09D11/38; C09D11/40

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2018-69652 A (CANON INC.) 10 May 2018 (2018-05-10)<br>paragraphs [0039]-[0060] | 1, 2, 4, 5, 10<br>3, 6-9, 11-16 |
| A | JP 2012-72243 A (SEIKO EPSON CORP.) 12 April 2012 (2012-04-12)<br>paragraphs [0084]-[0092], [0133] | 1-16 |
| A | JP 2010-520324 A (EASTMAN KODAK CO.) 10 June 2010 (2010-06-10)<br>paragraphs [0037], [0060]-[0069] | 1-16 |
| A | WO 2017/104477 A1 (DIC CORP.) 22 June 2017 (2017-06-22)<br>paragraphs [0204]-[0259] | 1-16 |
| A | JP 2006-274089 A (BROTHER IND., LTD.) 12 October 2006 (2006-10-12)<br>paragraphs [0042], [0054]-[0093] | 1-16 |
| A | JP 2021-146640 A (RICOH CO., LTD.) 27 September 2021 (2021-09-27)<br>paragraphs [0027], [0052]-[0070] | 1-16 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 November 2022** | **22 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2022/037729**

**C. DOCUMENTS CONSIDERED TO BE RELEVANT**

| Category* | Citation of document, with indication, where appropriate, of the relevant passages | Relevant to claim No. |
|---|---|---|
| A | JP 2021-38295 A (KYOCERA DOCUMENT SOLUTIONS INC.) 11 March 2021 (2021-03-11)<br>paragraphs [0013]-[0020], [0037], [0038], [0046]-[0073] | 1-16 |
| A | JP 2020-132802 A (SEIKO EPSON CORP.) 31 August 2020 (2020-08-31)<br>paragraphs [0117]-[0143], [0200]-[0235] | 1-16 |
| A | JP 2008-308662 A (CANON INC.) 25 December 2008 (2008-12-25)<br>paragraphs [0022]-[0042], [0109]-[0134] | 1-16 |
| A | JP 2013-112801 A (KONICA MINOLTA IJ TECHNOLOGIES INC.) 10 June 2013 (2013-06-10)<br>paragraphs [0048], [0106]-[0120] | 1-16 |
| A | JP 2017-8319 A (KAO CORP.) 12 January 2017 (2017-01-12)<br>paragraphs [0076]-[0111] | 1-16 |

Form PCT/ISA/210 (second sheet) (January 2015)

**INTERNATIONAL SEARCH REPORT**
**Information on patent family members**

International application No.
**PCT/JP2022/037729**

| Patent document cited in search report | Publication date (day/month/year) | Patent family member(s) | Publication date (day/month/year) |
|---|---|---|---|
| JP 2018-69652 A | 10 May 2018 | (Family: none) | |
| JP 2012-72243 A | 12 April 2012 | US 2012/0075380 A1<br>paragraphs [0096]-[0103], [0144] | |
| JP 2010-520324 A | 10 June 2010 | US 2008/0207805 A1<br>paragraphs [0045], [0069]-[0083]<br>WO 2008/106148 A1<br>EP 2129730 A1 | |
| WO 2017/104477 A1 | 22 June 2017 | US 2018/0362791 A1<br>paragraphs [0233]-[0316]<br>EP 3392319 A1<br>CN 108368368 A | |
| JP 2006-274089 A | 12 October 2006 | US 2006/0082629 A1<br>paragraphs [0051], [0061]-[0161] | |
| JP 2021-146640 A | 27 September 2021 | (Family: none) | |
| JP 2021-38295 A | 11 March 2021 | (Family: none) | |
| JP 2020-132802 A | 31 August 2020 | US 2020/0270473 A1<br>paragraphs [0131]-[0157], [0214]-[0271] | |
| JP 2008-308662 A | 25 December 2008 | US 2008/0280044 A1<br>paragraphs [0027]-[0050], [0144]-[0174]<br>EP 1990381 A1<br>CN 101302368 A | |
| JP 2013-112801 A | 10 June 2013 | (Family: none) | |
| JP 2017-8319 A | 12 January 2017 | US 2018/0187034 A1<br>paragraphs [0224]-[0342]<br>EP 3315566 A1<br>CN 107735464 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2017008319 A
- WO 2020203088 A
- JP 2002012607 A
- JP 2002188025 A
- JP 2003026978 A
- JP 2003342503 A
- WO 2021192720 A
- JP 2010083021 A
- JP 2009234221 A
- JP 10175315 A
- JP H10175315 A
- JP 2021182709 A


### Non-patent literature cited in the description


- JAPAN TAPPI Pulp and Paper Test Method. Pulp and Paper Technology Association
- Encyclopedia of Pigments. 2000
- **W. HERBST ; K. HUNGER.** *Industrial Organic Pigments*